# EUROPEAN PATENT SPECIFICATION

(11) **EP 3 243 132 B1**
(45) Date of publication and mention of the grant of the patent: **08.06.2022**
(21) Application number: 15805698.6
(22) Date of filing: 23.11.2015
(51) Int. Cl.: G06F 9/448

(54) **APPARATUS AND METHODS FOR VIRTUAL AND INTERFACE METHOD CALLS**
VORRICHTUNG UND VERFAHREN FÜR ANRUFE MIT VIRTUELLEN UND SCHNITTSTELLENVERFAHREN
APPAREIL ET PROCÉDÉS POUR DES APPELS DE PROCÉDÉ VIRTUEL ET D'INTERFACE

(30) Priority: 05.01.2015 US 201514589898
(43) Date of publication of application: 15.11.2017
(73) Proprietor: Google LLC, Mountain View, CA 94043 (US)
(72) Inventor: YANG, Mingyao, Mountain View, CA 94043 (US); ROGERS, Ian, Andrew, Mountain View, CA 94043 (US)
(74) Representative: Anderson, Oliver Ben
(86) International application number: PCT/US2015/062219
(87) International publication number: WO 2016/111766

(56) References cited:
- US-A- 5 907 707
- US-B1- 6 651 248
- Maria Cutumisu: "Thesis: Multiple Code Inheritance in Java", , 31 December 2003 (2003-12-31), XP055243224, Retrieved from the Internet: URL:http://webdocs.cs.ualberta.ca/~paullu/ Students/maria.cutumisu.msc.thesis.multico de.inherit.pdf [retrieved on 2016-01-20]
- BYUNG-SUN YANG ET AL: "Efficient Register Mapping and Allocation in LaTTe, an Open-Source Java Just-in-Time Compiler", IEEE TRANSACTIONS ON PARALLEL AND DISTRIBUTED SYSTEMS, IEEE SERVICE CENTER, LOS ALAMITOS, CA, US, vol. 18, no. 1, 1 January 2007 (2007-01-01), pages 57-69, XP011151537, ISSN: 1045-9219, DOI: 10.1109/TPDS.2007.253281
- JEVGENI KABANOV ET AL: "A thousand years of productivity: the JRebel story", SOFTWARE PRACTICE & EXPERIENCE., vol. 44, no. 1, 22 October 2012 (2012-10-22), pages 105-127, XP055243498, GB ISSN: 0038-0644, DOI: 10.1002/spe.2158
- None

## Description

### CROSS-REFERENCE TO RELATED APPLICATIONS

This application claims priority to U.S. Patent Application No. 14/589,898, entitled "Apparatus and Methods for Virtual and Interface Method Calls", filed January 5, 2015.

### BACKGROUND

Unless otherwise indicated herein, the materials described in this section are not prior art to the claims in this application and are not admitted to be prior art by inclusion in this section.

Modern software is often constructed using object-oriented principles, where a collection of objects are utilized to perform tasks of and store data related to the software. Many objects include methods, or software functions, that operate on data, including but not limited to data, stored as part of the object. An object can be defined in software as a class, which includes lists of methods and data for the object. A class can act as an archetype for a collection of more-specialized classes. For example, in object-oriented graphics software, a class of a polygon can be used as an archetype for classes of a triangle, a square, a hexagon, etc. The archetypical class can be termed the base class and the more-specialized classes can be termed subclasses of the base class.

The thesis titled "Multiple Code Inheritance in Java" by Maria Cutumisu (retrieved from http://webdocs.cs.ualberta.ca/~systems/mci/docs/thesis.pdf) describes a generalization of a Java Virtual Machine (JVM) to support multiple inheritance of code. The approach places code in interfaces, without requiring language syntax changes or compiler modifications. Interfaces are used to represent either new types of interfaces with code or traditional interfaces in Java.

US 6,651,248 B1 describes an interface method invocation mechanism which includes an interface method table (IMT) for a given class of objects. The IMT comprises a table of entries each corresponding to a set S of interface methods that are implemented by objects of the given class. The entries of the IMT are used to support invocation of interface methods. More specifically, processing of a method invocation statement involves either I) loading the pointer to the implementation of the interface method from an entry of the IMT and passing control to this implementation; or II) loading the pointer to a conflict resolution routine pointed by an IMT entry and passing control to this conflict resolution routine. The conflict resolution routine pointed to by the IMT entry identifies at execution time to the location of the particular interface method of the two or more interface methods that are associated with the given IMT entry that corresponds to the method invocation statement being processed, and pass control to this particular interface method.

US 5 907 707 describes a mechanism which includes three data structures: object data associated with each object O1, O2, O3 ... of a program, a class descriptor associated with the classes to which the objects O1, O2, O3 ... belong, and interface references.

"Efficient Register Mapping and Allocation in LaTTe, an Open-Source Java Just-in-Time Compiler" by Byung-Sun Yang et al describes LaTTe, an open-source Java JIT compiler that performs fast generation of efficiently register-mapped RISC code. LaTTe first maps "all" local variables and stack entries into pseudoregisters, followed by real register allocation which also coalesces copies corresponding to pushes and pops between local variables and stack entries aggressively.

"A thousand years of productivity: The JRebel story" by Jevgeni Kabanov describes JRebel which is a tool that tackles the problem of live application update for the Java Enterprise Edition platform. It does live code reloading, maps resources directly to the developer workspace, and propagates configuration changes to ensure that the developer can keep instantly alternating between the developing environment and the web browser, to save wasted time and increase the productivity flow.

### SUMMARY

The invention is defined by the claims.

### BRIEF DESCRIPTION OF THE FIGURES

### In the figures:

FIG. 1 shows a diagram of a runtime environment, in accordance with an example embodiment.
FIG. 2 is a flowchart of an example method, in accordance with an example embodiment.
FIG. 3 shows a computing device with source code and corresponding runtime environment that is related to the runtime environment of FIG. 1, in accordance with an example embodiment.
FIG. 4 shows a diagram of a runtime environment, in accordance with an example embodiment.
FIG. 5 is a flowchart of another example method, in accordance with an example embodiment.
FIG. 6 shows a computing device with source code and corresponding runtime environment that is related to the runtime environment of FIG. 4, in accordance with an example embodiment.
FIG. 7 shows a diagram of a runtime environment, in accordance with an example embodiment.
FIG. 8 is a flow chart illustrating another method, in accordance with an example embodiment.
FIG. 9 shows a computing device with source code and a corresponding runtime environment that is related to the runtime environment of FIG. 7, in accordance with an example embodiment.
FIG. 10 depicts a distributed computing architecture, in accordance with an example embodiment.
FIG 11A is a block diagram of a computing device, in accordance with an example embodiment.
FIG. 11B depicts a cloud-based server system, in accordance with an example embodiment.
FIG. 12 is a flow chart illustrating another method, in accordance with an example embodiment.

### DETAILED DESCRIPTION

A modern computing device can include an operating system, which is software that manages hardware resources of the computing device and provides common services for computer programs, such as application programs that execute on the computing device. Application programs, or simply applications, can use the services provided by the operating system to carry out one or more tasks. Some of the services provided by the operating system can involve runtime services, or services that support execution of computer programs, including applications. For example, an operating system can have runtime services that provide and/or support a runtime system, such as a Java runtime system for executing Java programs.

For applications written in object oriented languages such as Java, objects can have virtual and/or interface methods. A virtual method is a method of a class that is (or can be) overridden, or replaced, by a method having the same name in a subclass that inherits properties from the class. An interface method is a method that implements part or all of a specified interface. It is not unusual that some of the method calls of an application are virtual method and/or interface method calls, in order to take advantage of naming and other benefits associated with object oriented programming. As a result, the performance of virtual and interface method calls can be critical to the overall performance of the runtime system.

To implement a method call, the run time system can first dispatch, or select, a method for execution, and then call, or execute, the dispatched method. The specification of virtual/interface method calls can involve use of complicated method resolution rules often involving iterating through a method list and traversing a corresponding class hierarchy. To speed method dispatch, the runtime system can use, on a per-class basis, "vtables" for virtual methods and interface method tables for interface methods, where the term vtable is short for virtual method table. A vtable is a variable length table (or similar data structure) of table entries, with each entry including an identifier for a virtual method and a reference to the corresponding virtual method. Similarly, each entry in an interface method table includes an identifier for an interface method and a reference to the corresponding interface method.

By paying a one-time cost of laying out the tables, often during class linking time, no further method resolution is needed at each invocation time. At runtime, virtual/interface method dispatching is as simple as looking up vtable/interface method tables using the index of the invoked method. However, in an object layout of a managed runtime system, a number of indirections (dependent loads) can be used to finally locate and execute a dispatched method, including indirections to follow a vptr (virtual table pointer) to find a vtable for virtual method dispatch and indirections to follow an interface method table pointer to an interface method table for interface method dispatch. Those indirections can incur substantial performance penalties on modern processors and as a result hurt the performance of virtual/interface calls, and thus harm application performance.

To reduce these indirections, a class instance can include vtables and/or interface method tables to reduce the respective indirections used for vptrs and interface method table points, thus eliminating indirections to find vtables and interface method tables. In particular embodiments, entries of vtables and/or interface method tables can be extended to store (data related to) entry points of methods, and further increase performance of virtual/interface calls. An entry point can be an address of a first executable instruction of a method; that is, the entry point can be a starting address for executing instructions that make up the method. The entry point can be inserted by a compiler, interpreter, or other translating software that generates instructions from source code that can be executed by a computing device at runtime.

By increasing performance of method dispatch and calling, the overall performance of applications written in object-oriented languages can be increased. Further, by eliminating vptrs and interface method table pointers, some memory can be saved in the overall implementation of runtime class instances that include vtables and interface method tables, and, as indicated above, time involved in taking indirections of following vptrs and interface method table pointers can be saved. Application performance can be further enhanced by taking some additional storage to store entry points of methods in included vtables and interface method tables. Storage of entry points can lead to additional complexity in debugging if entry points are modified; *e.g.,* a debugger may change an entry point to refer to a reporting module that indicates when a method is called. However, this additional complexity is manageable, and may be reduced or eliminated after software applications are debugged and provided to end-users as production software.

### Example Class Runtime Environments and Related Methods

A vtable (or interface method table) can be constructed to give each virtual method (or interface method) a fixed entry. Then, when a runtime instance of a subclass is created, a copy of the superclass's vtable can be made and used to initialize the subclass's vtable. Then, the subclass's vtable can be modified; *e.g.,* the vtable can be extended by appending new entries for new methods or overwriting entries for methods that the subclass overrides.

An interface method table can represent all interface methods of a class. In some embodiments, a fixed-size interface method table can be used. For example, to dispatch a particular interface method, a hash value for the particular interface method can be calculated based on a method signature for the particular interface method. The method signature for a method, such as the particular interface method, can include the method's name, return type (if any), and types of any parameters for the method. For example, the method signature for an example method "int ExampleMethod1(int a, char b)" can be "int ExampleMethod1 int char". Then, a unique index or identifier for the particular interface method can be determined based on the method signature for the particular interface method. The hash value can be the unique index or identifier, a value calculated based on the method signature, or some other value.

The hash value for the particular interface method can be used to index into the interface method table to find an interface method table entry. To dispatch the particular interface method, the interface method table entry can store a reference to a runtime method corresponding to the particular interface method. Then, the runtime method can be executed to perform a call of the particular interface method.

The interface method table can be constructed by iterating through each implemented interface and filling in the interface method table entries with data for corresponding methods provided by the class for that interface. In these embodiments, the interface method table has a fixed size so it is possible that two or more distinct interface methods can index to the same interface method table entry. These two or more distinct interface methods can be classified as conflicting interface methods. When conflicting interface methods are found, the entry in the interface method table corresponding to the conflicting interface methods can include a reference to a conflict-resolution software that can determine, at runtime, which of the two or more distinct interface methods was actually intended to be called, and can then call the intended interface methods. Other techniques for implementing fixed-size interface method tables are possible.

Each virtual method has an index, called a method index, which corresponds to its vtable entry. The vtable can be a variable length data structure, depending on how many virtual methods that the class has. An interface method table on the other hand, is a fixed-size table. Each interface method is given a fixed index, also called a method index, which is used for indexing into a corresponding entry in the interface method table. If two interface methods have the same method index corresponding to the same entry of an interface method table, a conflict happens. In case of a conflict, a reference to a conflict-resolution method can be entered into the entry of the interface method table. In some scenarios, a class implements few (if any) interface methods; thus, when the rate of conflict is low enough, an interface method table can increase interface method performance.

Table 1 below shows an outline in pseudo code for source code a software interface having a number N of interface methods and an outline in pseudo code for source code of a class that implements the N interface methods of the software interface and additionally has P virtual methods.

**Table 1**

| |
|---|
| ```
 // outline of a software interface
 interface Intf1 {
     IM1( ... ); // IM1 = interface method 1
     IM2( ... ); // interface method 2
     IMn( ... ); // interface method N, assuming N > 2.
     }
     // outline of an class that implements interface Intf1
     class Ex1 implements Intf1 {
     // interface methods to implement Intf1 start here
     IM1( ... ) { ... };
     IM2( ... ) { ... };
     IMN( ... ) { ... };
     // outline of additional virtual methods start here
     VM1( ... ) { ... };
     VM2( ... ) { ... };
     VMP( ... ) { ... };
     }
     main(...)
     {
    Intl = new Ex1; // create an instantiation of class Ex1.
    }
``` |

In other examples, the source code is not related to a software interface. In such examples, interfaces, such as interface "Intfl" shown above, would not be present in the source code, N would equal 0, and the class "Ex1" would have no interface methods. In these examples, P would usually be greater than 0, as many classes have at least one method, but both N and P can equal 0 in particular examples. In even other examples, N and/or P can be less than 3; *e.g.*, the interface "Intfl" can have one or two methods and/or the class "Ex1" can have one or two additional virtual methods. In still other examples, the class "Ex1" can implement interface "Intfl" without using additional virtual methods; *i.e.,* N > 0, and P = 0.

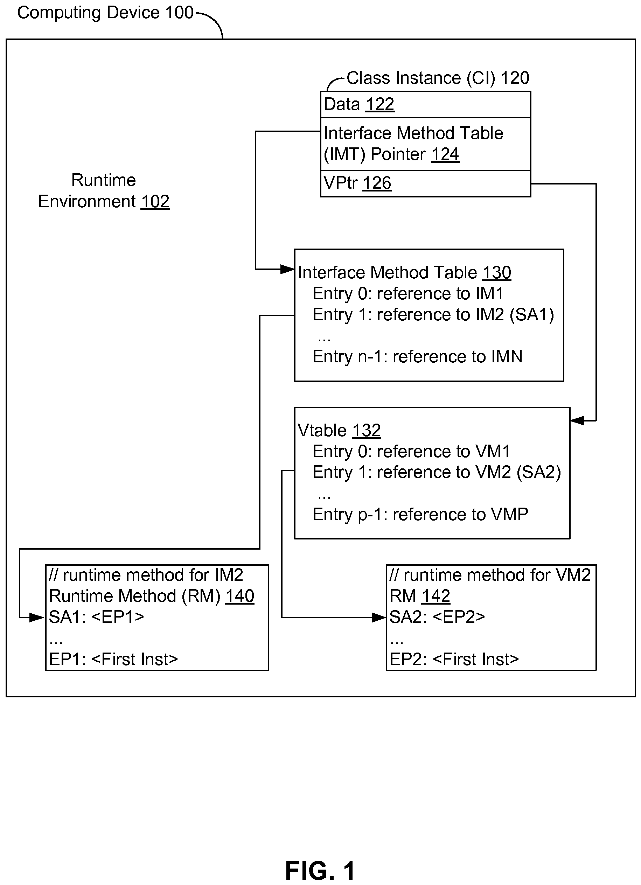

FIG. 1 shows a diagram of runtime environment 102, in accordance with an example embodiment. Runtime environment 102 can be provided by computing device 100 to support a class that implements a software interface, such as example class "Ex1" implementing interface "Intfl" indicated using the source code that is outlined above in Table 1.

FIG. 1 shows class instance 120 with data 122, interface method table pointer 124, and virtual table pointer (VPtr) 126. Data 122 can include storage for class variables and other data. Interface method table pointer 124 refers or points to interface method table 130. Interface method table 130 can be an array (or other data structure) of interface method table entries. Each table entry can include a reference address for a corresponding compiled method. Interface method table 130 includes N interface method table entries corresponding to the N interface methods of the class: entry 0 referring to an interface method IM1 or "interface method 1" of interface "Intfl" of Table 1., entry 1 for interface method IM2 or "interface method 2" of interface "Intfl" of Table 1, and so on, until reaching entry N-1 for interface method IMN or "interface method N" of interface "Intfl" of Table 1. Each of interface methods IM1, IM2 ... IMN can be implemented by the class represented by class instance 120 and/or by a parent class of the class represented by class instance 120.

FIG. 1 shows that entry 1 of interface method table 130 refers to interface method IM2. A runtime method includes computer-executable instructions generated by compiling, interpreting, and/or otherwise translating source code of a software method; for example, runtime method 140 includes computer-executable instructions corresponding to interface method IM2. Then, as entry 1 refers to interface method IM2, entry 1 of interface method table 130 includes a reference to runtime method 140.

In the example shown in FIG. 1, entry 1 of interface method table 130 includes a value of a starting address SA1 of runtime method 140. In some embodiments, the first address of a runtime method can hold an entry point value. For example, suppose that SA1 = 0x010000 (hexadecimal 10000 = 65,536 decimal) and EP1 = 0x010040 (65,560 decimal). Then, the contents of starting address 0x010000 of runtime method 140 can equal 0x010040, which is the entry point for runtime method 140.

In other embodiments, the first address of a runtime method can store data related to the entry point; *e.g.,* the starting address can store an entry point offset from the starting address value to the entry point. For example, again suppose that SA1 = 0x010000 and EP1 = 0x010040. The offset from starting address SA1 to entry point EP1 is the difference EP1 - SA1 = 0x010040 - 0x010000 = 0x000040 (64 decimal). Then, the contents of starting address 0x010000 of runtime method 140 can equal 0x000040 which is the entry point offset value.

The contents of address SA1 as shown in FIG. 1 as "<EP1>" which is the value of an entry point for runtime method 140. FIG. 1 indicates that a "First Instruction" of runtime method 140 is stored at address EP1, and so indicates that address SA1 stores an entry point value for runtime method 140.

Virtual table pointer 126 refers or points to virtual method table (vtable) 132. Vtable 132 can be an array (or other data structure) of vtable entries. Each vtable entry can include a reference address for a corresponding runtime method.

Vtable 132 includes P vtable entries corresponding to the P interface methods of the class: entry 0 referring to an virtual method VM1 or "virtual method 1" of class "Ex1" of Table 1, entry 1 referring to a virtual method VM2 or "virtual method 2" of class "Ex1" of Table 1, and so on, until reaching entry P-1 for virtual method VMP or "virtual method P" of class "Ex1" of Table 1. Each of virtual methods VM1, VM2 ... VMP can be implemented by the class represented by class instance 120 and/or by a parent class of the class represented by class instance 120.

FIG. 1 shows that entry 1 of vtable 132 refers to virtual method VM2. Runtime method 142 includes computer-executable instructions generated by compiling, interpreting, and/or otherwise translating the source code of the software for virtual method VM2. Then, as entry 1 refers to interface method VM2, entry 1 of vtable 132 includes a reference to runtime method 142.

In the example shown in FIG. 1, entry 1 of interface method table 130 includes a value of a starting address SA2 of runtime method 142. The contents of address SA2 as shown in FIG. 1 as "<EP2>". FIG. 1 indicates that a "First Instruction" of runtime method 142 is stored at address EP2, and so indicates that address SA2 stores an entry point value for runtime method 142.

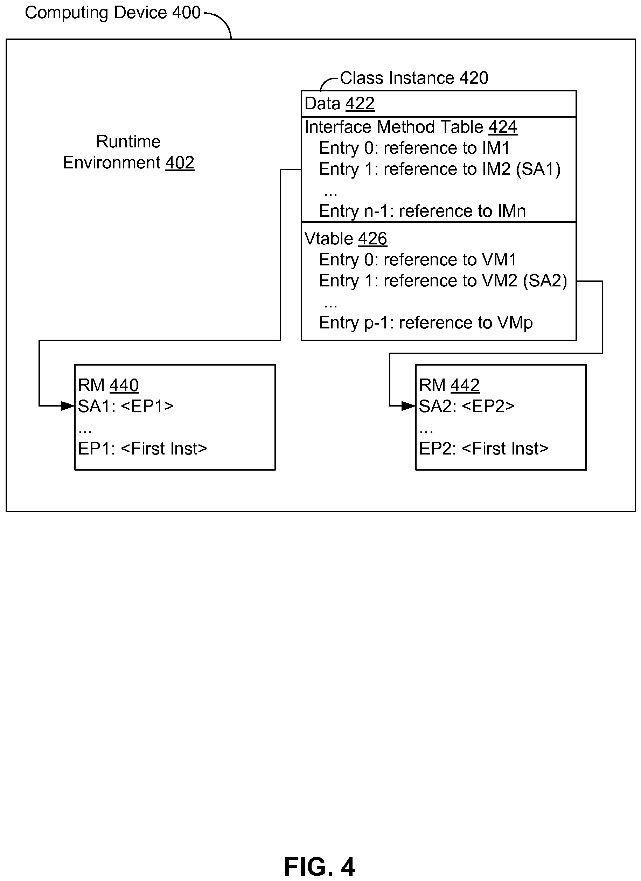

As shown in FIG. 4, runtime environment 102 can include class instance (CI) 120 for a class that has N > 2 interface methods, and P > 2 virtual methods. In other examples, class instance 120 can be associated with a class with fewer interface methods and/or virtual methods; *i.e.,* N ≤ 2 and/or P ≤ 2. For example, class instance 120 can be associated a class that is unassociated with a software interface; *i.e.,* N = 0. In those examples, interface method table pointer 124, interface method table 130, and/or runtime methods for interface methods may not be present in runtime environment 102. In still other examples, class instance 120 can be associated that a class that is not associated with virtual methods; *i.e.,* P = 0. In those examples, vptr 126, vtable 132, and/or runtime methods for virtual methods may not be present in runtime environment 102.

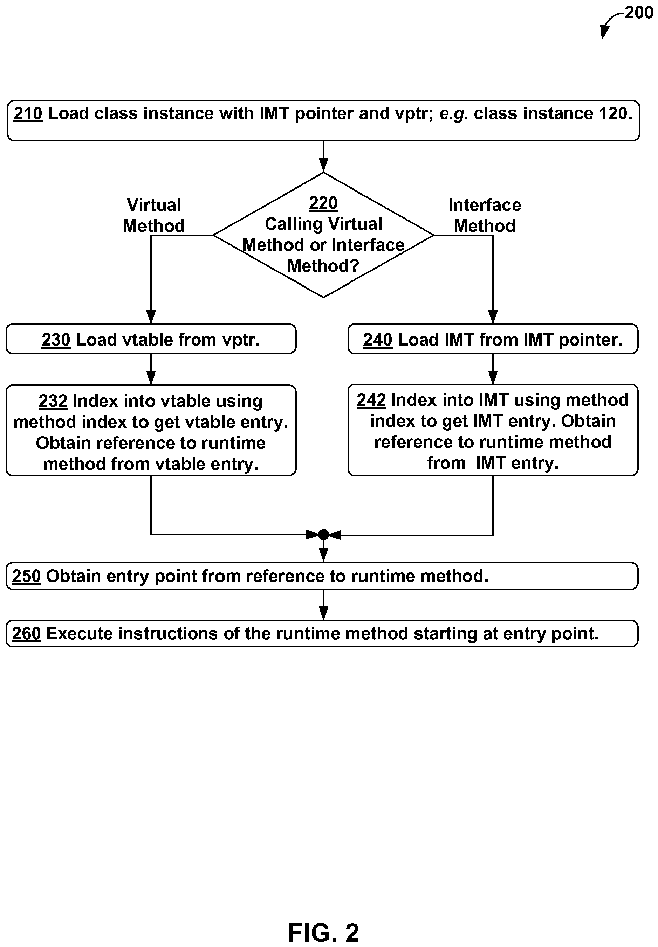

FIG. 2 is a flowchart of method 200, in accordance with an example embodiment. Method 200 can be carried out by a computing device, such as computing device 100 discussed above in the context of FIG. 1. Method 200 involves dispatching and calling a method of a class, where the method has a known method index. The called method can be either a virtual method of the class or an interface method of the class.

Method 200 can begin at block 210, where the computing device can load a class instance having an interface method table pointer and a virtual table pointer, such as class instance 120. At block 220, the computing device can decide whether a virtual method is being called or an interface method is being called. If a virtual method is being called, the computing device can proceed to block 230; otherwise, an interface method is being called, and the computing device can proceed to block 240.

At block 230, since method 200 involves a call to a virtual method, the computing device can load a vtable from a vptr of the class instance. Then, at block 232, the computing device can use the method index of the called method to index into the vtable and find a vtable entry for the called method. Then, the computing device can use the found vtable entry to obtain a reference to a runtime method corresponding to the called method; *e.g.,* the value of a starting address of the corresponding runtime method. Upon completing block 232, the computing device can proceed to block 250.

At block 240, since method 200 involves a call to an interface method, the computing device can load an interface method table (IMT) from an interface method table pointer of the class instance. Then, at block 242, the computing device can use the method index of the called method to index into the interface method table and find an interface method table entry for the called method. Then, the computing device can use the found interface method table entry to obtain a reference to a runtime method corresponding to the called method; *e.g.,* the value of a starting address of the corresponding runtime method.

At block 250, the computing device can obtain an entry point from the reference to the corresponding runtime method. For example, the starting address of the runtime method can store entry point data, such as a value of an entry point or a value of an entry point offset, for the corresponding runtime method. Then, the computing device can use the entry point data to obtain the entry point. At block 260, the computing device can execute instructions of the corresponding runtime method starting at the entry point, thus calling the called method.

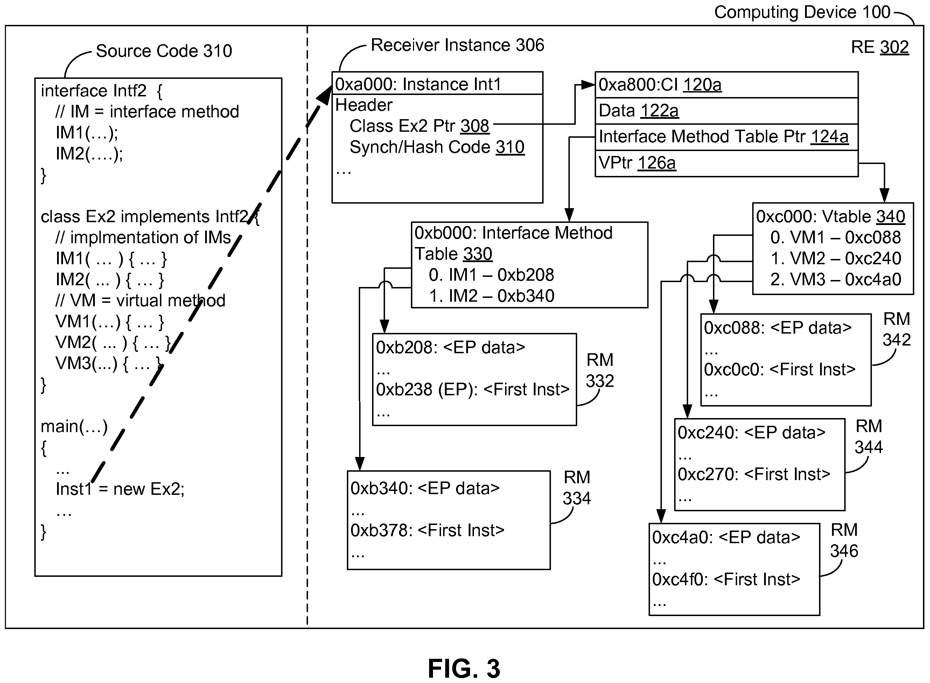

FIG. 3 shows computing device 100 storing source code 310 and providing corresponding runtime environment (RE) 302, in accordance with an example embodiment.

Source code 310 is related to the source code shown in Table 1 above. In particular, source code 310 shows an outline of class "Ex2" that implements a software interface "Intf2". Interface "Intf2" specifies two interface methods: IM1 and IM2. Class "Ex2" implements interface "Intf2" and includes an outline of software for interface methods IM1 and IM2, as well as three virtual methods: VM1, VM2, and VM3. In the context of Table 1, interface "Intf2" and class "Ex2" are an example of the outlined source code with a number of interface methods N = 2 and a number of virtual methods P = 3. Other classes can be supported by runtime environment 302 as well.

In a managed runtime system, such as used by computing device 300 to provide runtime environment 302, an implementation of a receiver instance can have a two word header for each object, with one word for a reference to a class object or instance, and one word for a synchronization/hash code to for checking validity of the class object/instance. FIG. 3 shows receiver instance 306 named "Inst1" in source code 310 that is stored by computing device 300 starting at memory address 0xa000 with a header including a pointer 308 to class instance 120a and a synchronization/hash code 310.

Runtime environment 302 is related to runtime environment 102 shown in FIG. 1. In particular, class instance 120a has the same fields as class instance 120 in runtime environment 102. As shown in FIG. 3, class instance 120a includes data 122a, interface method table pointer 124a, and virtual table pointer 126a fields, which correspond to respective data 122, interface method table pointer 124, and virtual table pointer 126 fields of class instance 120.

FIG. 3 shows that runtime environment 302 also includes five runtime methods summarized in Table 2 below:

**Table 2**

| **Runtime Method** | **Corresponds to / Has computer-executable instructions for** | **Starting Address** | **Entry Point** |
|---|---|---|---|
| Runtime Method 332 | Interface method IM1 | 0xb208 | 0xb238 |
| Runtime Method 334 | Interface method IM2 | 0xb340 | 0xb378 |
| Runtime Method 342 | Virtual method VM1 | 0xc088 | OxcOcO |
| Runtime Method 344 | Virtual method VM2 | 0xc240 | 0xc070 |
| Runtime Method 346 | Virtual method VM3 | 0xc4a0 | 0xc4f0 |

Interface method table pointer 124a points to interface method table 330, which is stored starting at address 0xb000. Interface method table 330 has two entries: interface method table entry 0 for interface method IM1 that includes address 0xb208, which Table 2 indicates is a starting address for runtime method 332 corresponding to interface method IM1, and interface method table entry 1 for interface method IM2 that includes starting address 0xb340 for runtime method 334 corresponding to interface method IM2.

VPtr 126a points to vtable 340, which is stored starting at address 0xc000. Vtable 340 has three entries: vtable entry 0 for virtual method VM1 that includes starting address 0xc088 for runtime method 342 corresponding to virtual method VM1, vtable entry 1 for virtual method VM2 that includes starting address 0xc240 for runtime method 344 corresponding to virtual method VM2, and vtable entry 2 for virtual method VM3 that includes starting address 0xc4a0 for runtime method 346 corresponding to virtual method VM3.

FIG. 3 includes black arrows leading from respective entries 0 and 1 of interface method table 330 to the respective starting addresses 0xb208 of runtime method 332 and 0xb340 of runtime method 334 to illustrate relationships between entries of interface method table 330 and runtime methods 332, 334. FIG. 3 also includes black arrows leading from respective entries 0, 1, and 2 of vtable 340 to the respective starting addresses 0xc088 of runtime method 342, 0xc240 of runtime method 344, and 0xc4a0 of runtime method 346 to illustrate relationships between entries of vtable 340 and runtime methods 342, 344, and 346.

Table 3A illustrates how computing device 100 can apply method 200 to runtime environment 302 to call interface methods IM1 and IM2.

**Table 3A**

| **Method 200 Block** | **IM1 Call** | **IM2 Call** |
|---|---|---|
| Block 210 (Load class instance) | Load class instance 120a at 0xa800 using class Ex2 Pointer 308 of receiver instance 306. | The procedures for blocks 210, 220, and 240 of method 200 can be used for a call to interface method IM2 in the same way as described for the call to interface method IM1. |
| Block 220 (Virtual/Interface Method Test) | This is an interface method call, so proceed to block 240. | |
| Block 240 (Load interface method table) | Load interface method table 330 at 0xb000 using interface method table pointer 124a of class instance 120a. | |
| Block 242 (Obtain runtime method reference) | The method index for IM1 is 0. Index into interface method table 330 to find entry 0. Reference (starting address (SA)) stored in entry 0 is 0xb208. | The method index for IM1 is 1. Index into interface method table 330 to find entry 1. Reference (SA) stored in entry 1 is 0xb340. |
| Block 250 (Obtain entry point) | Load contents of reference 0xb208. If the reference stores entry point (EP) as EP data, contents of 0xb208 = EP 0xb238. If the reference stores an EP offset (EPO) as EP data, contents of 0xb208 = EPO 0x30. Then, EP = SA + EPO = 0xb208 + 0x30 = 0xb238. | Load contents of reference 0xb340. If the reference stores EP, contents of Oxb340 = EP 0xb378. If the reference stores EPO, contents of 0xb340 = EPO 0x38. Then, EP = SA + EPO = 0xb340 + 0x38 = 0xb378. |
| Block 260 (Execute instructions) | Execute instructions starting at EP 0xb238. | Execute instructions starting at EP 0xb378. |

Table 3B illustrates how computing device 100 can apply method 200 to runtime environment 302 to call virtual methods VM1, VM2, and VM3.

**Table 3B**

| **Method 200 Block** | **VM1 Call** | **VM2 Call** | **VM3 Call** |
|---|---|---|---|
| Block 210 (Load class instance) | Load class instance 120a at 0xa800 using class Ex2 Pointer 308 of receiver instance 306. | The procedures for blocks 210, 220, and 230 of method 200 can be used for calls to virtual methods VM2 and VM3 in the same way as described for the call to virtual method VM1. | |
| Block 220 (Virtual/Interface Method Test) | This is an virtual method call, so proceed to block 230 | | |
| Block 230 (Load vtable) | Load vtable 340 at 0xc000 using VPtr 126a of class instance 120a. | | |
| Block 232 (Obtain runtime method reference) | The method index for VM1 is 0. Index into vtable 340 to find entry 0. Reference (SA) stored in entry 0 is 0xc088. | The method index for VM2 is 1. Index into vtable 340 to find entry 1. Reference (SA) stored in entry 1 is 0xc240. | The method index for VM3 is 2. Index into vtable 340 to find entry 2. Reference (SA) stored in entry 2 is 0xc4a0. |
| Block 250 (Obtain entry point) | Load contents of reference 0xc088. If the reference stores EP, contents of Oxc088 = EP OxcOcO. If the reference stores EPO, contents of 0xc088 = EPO 0x38. Then, EP = SA + EPO = 0xc088 + 0x38 = OxcOcO. | Load contents of reference 0xc240. If the reference stores EP, contents of 0xc240 = EP 0xc270. If the reference stores EPO, contents of 0xc240 = EPO 0x30. Then, EP = SA + EPO = 0xc240 + 0x30 = 0xc270. | Load contents of reference 0xc4a0. If the reference stores EP, contents of 0xc4a0= EP Oxc4fO. If the reference stores EPO, contents of 0xc4a0 = EPO 0x50. Then, EP = SA + EPO = 0xc4a0 + 0x50 = 0xc4f0. |
| Block 260 (Execute instructions) | Execute instructions starting at EP OxcOcO. | Execute instructions starting at EP 0xc270. | Execute instructions starting at EP 0xc4f0. |

FIG. 4 shows a diagram of runtime environment 402, in accordance with an example embodiment. Runtime environment 402 can be provided by computing device 400 to support a class that implements a software interface, such as example class "Ex1" implementing interface "Intfl" indicated using the source code that is outlined above in Table 1 and as discussed above in the context of FIGS 1-3.

Class instance 420 includes data 422, interface method table 424 and vtable 426. Data 422 can include storage for class variables and other data. Class instance 420 of runtime environment 402 embeds interface method table 424 and vtable 426. Class instances 120 and 420 differ -- in comparison with class instance 120, class instance 420 has replaced interface method table pointer 124 and interface method table 130 with interface method table 424, and replaced virtual table pointer 126 and vtable 132 with vtable 426.

Embedding interface method tables and vtables into class instances, such as class instance 420, can speed method dispatch/calls by eliminating loading an interface method table (or virtual method table/vtable) from an interface method table pointer (or virtual table pointer/VPtr) for each interface method (or virtual method) dispatch. Then, a runtime method can be loaded from a class instance as a result. Interface method tables can have a predetermined or fixed size and can be laid out before variable-length vtables.

Given a method index, one constant offset O1 from a starting address of class instance 420 can be used to look up a runtime method while dispatching/calling interface methods and another constant offset 02 can be used to look up the runtime method for dispatching/calling virtual methods. For example, suppose offset O1 to interface method table 424 from the start of class instance 420 is determined, and a size of interface method table 424 ST1 is determined. Then, offset 02 to the start of vtable 426 can be determined as 02 = O1 + ST1. Then, given a starting address SAci of class instance 420, then the starting address SAit of interface method table 424 is: SAit = SAci + O1, and the starting address SAvt of vtable 426 is: SAvt = SAci + O1 + 02 = SAit + 02.

Since vtable 426 is embedded into class instance 420 and vtable 426 can be variably sized from class to class (e.g., sub-classes can add virtual methods to those defined by a parent class, and so increase the size of vtable 426), a size of class instance 420 is unknown until a size of vtable 426 is determined. For example, the size of vtable 426 may be determined at a class linking phase of generating an application. However, storage for class instance 420 may be allocated during application generation before the class linking phase. In these scenarios, a placeholder for class instance 420 can be allocated and used until the vtable size is determined. Once the vtable size is determined, the placeholder can be cloned into an actual copy of class instance 420 having vtable 426 of the determined size.

In the example shown in FIG. 4, runtime environment 402 provided by computing device 400 supports a class having the same source code as the class supported by runtime environment 102 provided by computing device 100 of FIG. 1. In this example, runtime methods 440 and 442 of FIG. 4 can have the same starting addresses, entry points, and instruction as respective runtime methods 140 and 142 of FIG. 1. As such, interface method table 130 of FIG. 1 and interface method table 424 can represent the same interface methods and the data in interface method table entries 0, 1, ... N-1 of interface method table 424 can be the same as the data in the respective interface method table entries 0, 1, ... N-1 of interface method table 130. Additionally, vtable 132 of FIG. 1 and vtable 426 can represent the same virtual methods and the data in vtable entries 0, 1 ... P-1 of vtable 426 can be the same as the data in the respective vtable entries 0, 1 ... P-1 of vtable 132.

As shown in FIG. 4, runtime environment 402 can include class instance 420 for a class that has N > 2 interface methods, and P > 2 virtual methods. In other examples, class instance 420 can be associated with a class with fewer interface methods and/or virtual methods; *i.e.,* N ≤ 2 and/or P ≤ 2. For example, class instance 420 can be associated a class that is unassociated with a software interface; *i.e.,* N = 0. In those examples, interface method table 424 and/or runtime methods for interface methods may not be present in runtime environment 402. In still other examples, class instance 420 can be associated that a class that is not associated with virtual methods; *i.e.,* P = 0. In those examples, vtable 426 and/or runtime methods for virtual methods may not be present in runtime environment 402.

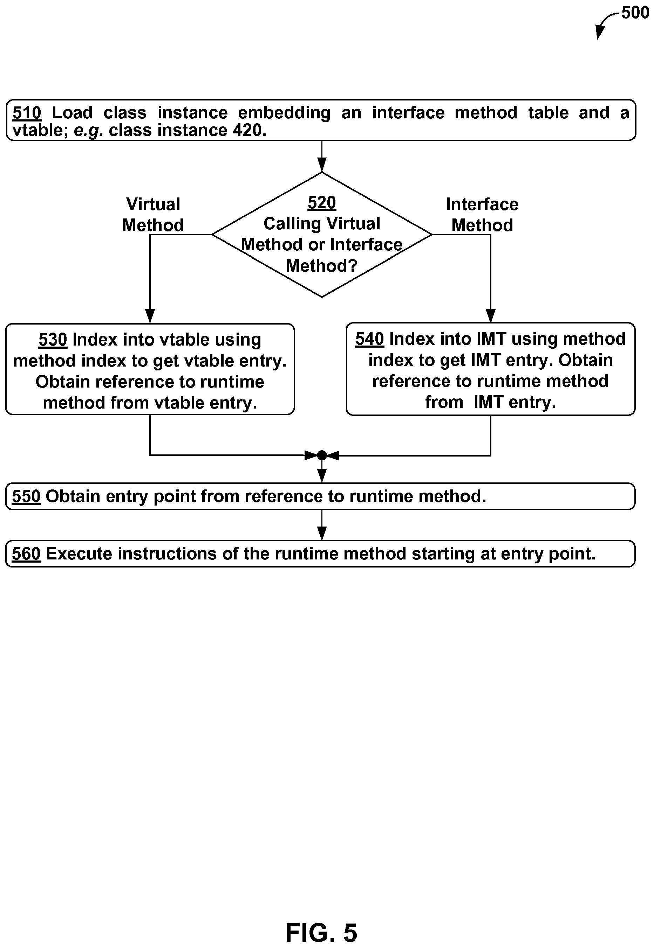

FIG. 5 is a flowchart of method 500, in accordance with an example embodiment. Method 500 can be carried out by a computing device, such as computing device 400 discussed above in the context of FIG. 4. Method 500 involves dispatching and calling a method of a class, where the method has a known method index. The called method can be either a virtual method of the class or an interface method of the class.

Method 500 can begin at block 510, where the computing device can load a class instance embedding an interface method table and a vtable, such as class instance 420. At block 520, the computing device can decide whether a virtual method is being called or an interface method is being called. If a virtual method is being called, the computing device can proceed to block 530; otherwise, an interface method is being called, and the computing device can proceed to block 540.

At block 530, since method 500 involves a call to a virtual method, the computing device can use the method index of the called method to index into the vtable of the class instance and find a vtable entry for the called method. Then, the computing device can use the found vtable entry to obtain a reference to a runtime method corresponding to the called method; *e.g.,* the value of starting address of the corresponding runtime method. Upon completing block 530, the computing device can proceed to block 550.

At block 540, since method 500 involves a call to an interface method, the computing device can use the method index of the called method to index into the interface method table of the class instance and find an interface method table entry for the called method. Then, the computing device can use the found interface method table entry to obtain a reference to a runtime method corresponding to the called method; *e.g.,* the value of a starting address of the corresponding runtime method.

At block 550, the computing device can obtain an entry point from the reference to the corresponding runtime method. For example, the starting address of the runtime method can store entry point data, such as a value of an entry point or a value of an entry point offset, for the corresponding runtime method. Then, the computing device can use the entry point data to obtain the entry point. At block 560, the computing device can execute instructions of the corresponding runtime method starting at the entry point, thus calling the called method.

In comparing methods 200 and 500, method 500 simplifies method 200 by eliminating blocks related to the retrieval of interface method tables and vtables from respective interface method table pointers and virtual table pointers, as these tables are embedded into the class instances. That is, by using embedded tables, method 500 does not utilize functionality related to blocks 232 and 242 of method 200.

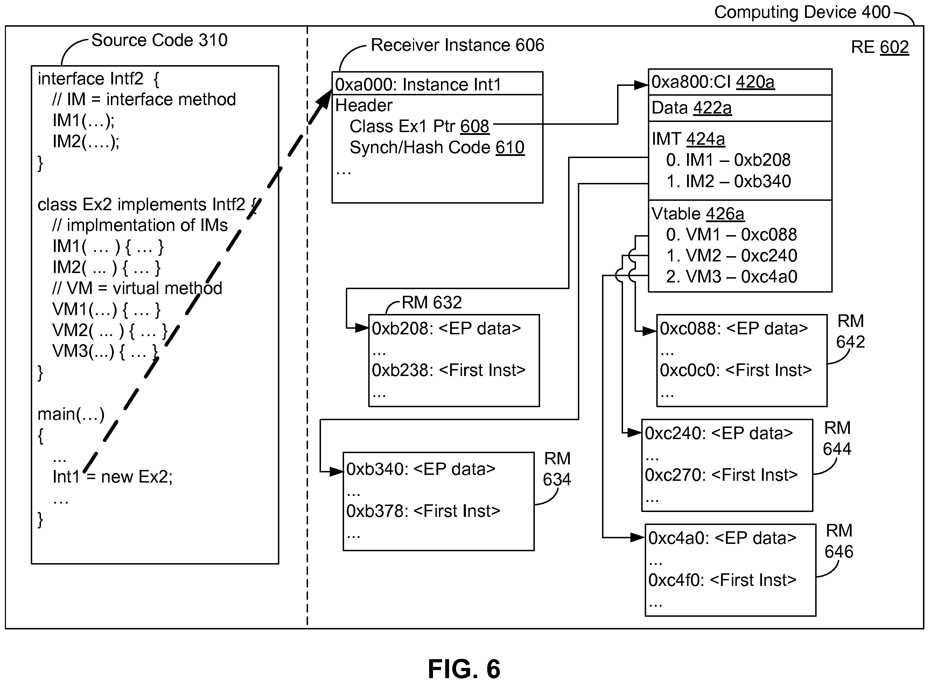

FIG. 6 shows computing device 400 storing source code 310 and providing corresponding runtime environment 602, in accordance with an example embodiment. Source code 310 is discussed above in the context of FIG. 3. Other classes can be supported by runtime environment 302 as well.

FIG. 6 shows receiver instance 606 named "Inst1" in source code 310 that is stored by computing device 600 starting at memory address 0xa000 with a header including a pointer 608 to class instance 420a and a synchronization/hash code 610.

Runtime environment 602 is related to runtime environment 402 shown in FIG. 4. In particular, class instance 420a has the same fields as class instance 420 in runtime environment 402. As shown in FIG. 6, class instance 420a includes data 422a, interface method table 424a, and virtual table 426a fields, which correspond to respective data 422, interface method table 424, and virtual table 426 fields of class instance 420.

FIG. 6 shows that runtime environment 602 also includes five runtime methods summarized in Table 4 below. Table 4 has the same information as Table 2, Table 6 is related to Table above - Table 4 has the same information as Table 2, save that the numbers of the runtime methods differ between the respective first columns of Tables 2 and 4.

**Table 4**

| **Runtime Method** | **Corresponds to / Has computer-executable instructions for** | **Starting Address** | **Entry Point** |
|---|---|---|---|
| Runtime Method 632 | Interface method IM1 | 0xb208 | 0xb238 |
| Runtime Method 634 | Interface method IM2 | 0xb340 | 0xb378 |
| Runtime Method 642 | Virtual method VM1 | 0xc088 | OxcOcO |
| Runtime Method 644 | Virtual method VM2 | 0xc240 | 0xc070 |
| Runtime Method 646 | Virtual method VM3 | 0xc4a0 | 0xc4f0 |

Interface method table 424a has two entries having the same data as interface method table 330, and vtable 426a has three entries storing the same data as corresponding entries of vtable 340, and all of these entries are discussed above in more detail in the context of FIG. 3. FIG. 6 includes black arrows leading from respective entries 0 and 1 of interface method table 424a to the respective starting addresses 0xb208 of runtime method 632 and 0xb340 of runtime method 634 to illustrate relationships between entries of interface method table 424a and runtime methods 632, 634. FIG. 6 also includes black arrows leading from respective entries 0, 1, and 2 of vtable 426a to the respective starting addresses 0xc088 of runtime method 642, 0xc240 of runtime method 644, and 0xc4a0 of runtime method 646 to illustrate relationships between entries of vtable 426a and runtime methods 942, 944, and 946.

Table 5A illustrates how computing device 400 can apply method 500 to runtime environment 602 to call interface methods IM1 and IM2.

**Table 5A**

| **Method 500 Block** | **IM1 Call** | **IM2 Call** |
|---|---|---|
| Block 510 (Load class instance) | Load class instance 420a at 0xa800 using class Ex2 pointer 608 of receiver instance 606. | The procedures for blocks 510 and 520 of method 500 can be used for a call to interface method IM2 in the same way as described for the call to interface method IM1. |
| Block 520 (Virtual/Interface Method Test) | This is an interface method call, so proceed to block 540. | |
| Block 540 (Obtain runtime method reference) | The method index for IM1 is 0. Index into interface method table 424a of class instance 420a to find entry 0. Reference (starting address (SA)) stored in entry 0 is 0xb208. | The method index for IM1 is 1. Index into interface method table 424a of class instance 420a to find entry 1. Reference (SA) stored in entry 1 is 0xb340. |
| Block 550 (Obtain entry point) | Load contents of reference 0xb208. If the reference stores entry point (EP) as EP data, contents of 0xb208 = EP 0xb238. If the reference stores an EP offset (EPO) as EP data, contents of 0xb208 = EPO 0x30. Then, EP = SA + EPO = 0xb208 + 0x30 = 0xb238. | Load contents of reference 0xb340. If the reference stores EP, contents of Oxb340 = EP 0xb378. If the reference stores EPO, contents of 0xb340 = EPO 0x38. Then, EP = SA + EPO = 0xb340 + 0x38 = 0xb378. |
| Block 560 (Execute instructions) | Execute instructions starting at EP 0xb238. | Execute instructions starting at EP 0xb378. |

Table 5B illustrates how computing device 400 can apply method 500 to runtime environment 602 to call virtual methods VM1, VM2, and VM3.

**Table 5B**

| **Method 500 Block** | **VM1 Call** | **VM2 Call VM3 Call** | |
|---|---|---|---|
| Block 510 (Load class instance) | Load class instance 420a at 0xa800 using class Ex2 pointer 608 of receiver instance 606. | The procedures for blocks 510 and 520 of method 500 can be used for calls to virtual methods VM2 and VM3 in the same way as described for the call to virtual method VM1. | |
| Block 520 (Virtual/Interface Method Test) | This is a virtual method call, so proceed to block 530. | | |
| Block 530 (Obtain runtime method reference) | The method index for VM1 is 0. Index into vtable 426a of class instance 420a to find entry 0. Reference (SA) stored in entry 0 is 0xc088. | The method index for VM2 is 1. Index into vtable 426a of class instance 420a to find entry 1. Reference (SA) stored in entry 1 is 0xc240. | The method index for VM3 is 2. Index into vtable 426a of class instance 420a to find entry 2. Reference (SA) stored in entry 2 is 0xc4a0. |
| Block 550 (Obtain entry point) | Load contents of reference 0xc088. If the reference stores EP, contents of Oxc088 = EP OxcOcO. If the reference stores EPO, contents of 0xc088 = EPO 0x38. Then, EP = SA + EPO = 0xc088 + 0x38 = OxcOcO. | Load contents of reference 0xc240. If the reference stores EP, contents of 0xc240 = EP 0xc270. If the reference stores EPO, contents of 0xc240 = EPO 0x30. Then, EP = SA + EPO = 0xc240 + 0x30 = 0xc270. | Load contents of reference 0xc4a0. If the reference stores EP, contents of 0xc4a0= EP Oxc4fO. If the reference stores EPO, contents of 0xc4a0 = EPO 0x50. Then, EP = SA + EPO = 0xc4a0 + 0x50 = 0xc4f0. |
| Block 560 (Execute instructions) | Execute instructions starting at EP OxcOcO. | Execute instructions starting at EP 0xc270. | Execute instructions starting at EP 0xc4f0. |

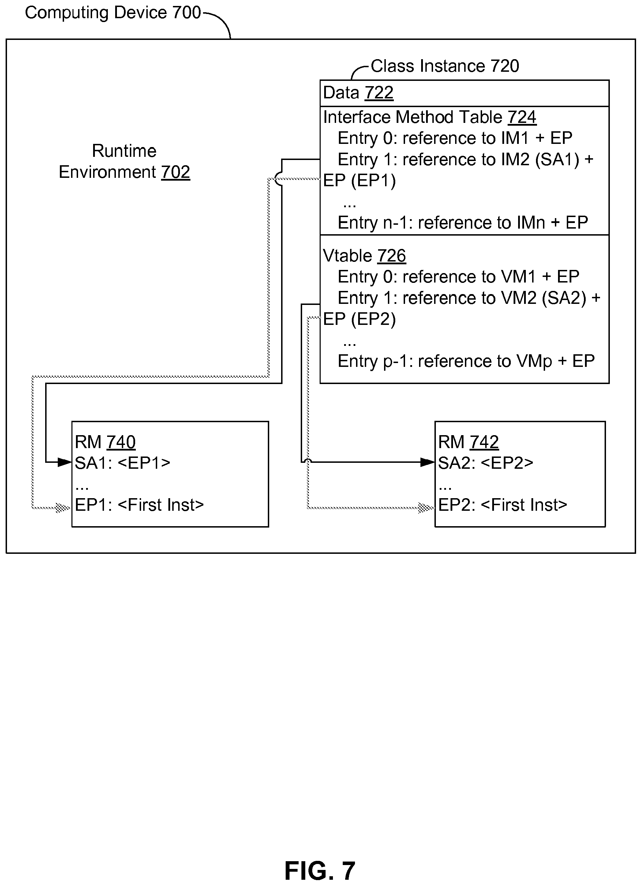

FIG. 7 shows a diagram of runtime environment 702, in accordance with an example embodiment. Runtime environment 702 can be provided by computing device 700 to support a class that implements a software interface, such as example class "Ex1" implementing interface "Intfl" indicated using the source code that is outlined above in Table 1 and as discussed above in the context of FIGS 1-6.

Class instance 720 includes data 722, interface method table 724 and vtable 726. Data 722 can include storage for class variables and other data. As with class instance 420, class instance 720 of runtime environment 402 embeds an interface method table and a vtable - these tables are shown in FIG. 7 as interface method table 724 and vtable 726. As such, the differences between class instances 120 and 720 are the same as the differences between class instances 120 and 420 discussed above in the context of FIG. 4.

In comparison with class instance 420, entries of interface method table 724 and vtable 726 of class instance 720 include entry point data not present in entries of interface method table 424 and vtable 426 of class instance 420. For example, FIG. 7 shows that entry 1 of interface method table 724 relates to interface method IM2 and stores a reference of starting address SA1 for runtime method 740 and an entry point value of EP1 for an entry point of runtime method 740, where runtime method 740 corresponds to interface method IM2 as discussed above in the context of at least FIG. 1. FIG. 7 also shows that entry 1 of vtable 726 relates to virtual method VM2 and stores a reference of starting address SA2 for runtime method 742 and an entry point value of EP2 for an entry point of runtime method 742, where runtime method 742 corresponds to virtual method VM2 as discussed above in the context of at least FIG. 1.

Also, entries of interface method table 724 and vtable 726 of class instance 720 store additional entry point data and so utilize more space than corresponding entries of interface method table 424 and vtable 426 of class instance 420. However, dispatching and calling a virtual/interface method can be simplified by loading entry points directly, thereby likely increasing performance of method dispatches/calls.

In some embodiments, entries in interface method table 724 and vtable 726 can store entry point values as entry point data. In other embodiments, such as embodiments where starting addresses of runtime methods store entry point offsets, entries in interface method table 724 and/or vtable 726 can have table entries storing entry point values or entry point offset values as entry point data; *e.g.,* as entry point EPx of runtime method RMx is stored an offset OFFx from starting address STARTx of runtime method RMx, then interface method table 724 and/or vtable 726 can either store offset OFFx as entry point data or computed entry point EPx as an entry point data, where EPx = STARTx + OFFx.

In the example shown in FIG. 7, runtime environment 702 provided by computing device 700 supports a class having the same source code as the class supported by respective runtime environments 102 and 402 provided by respective computing devices 100 and 400. In this example, runtime methods 740 and 742 of FIG. 7 can have the same starting addresses, entry points, and instruction as respective runtime methods 140 and 142 of FIG. 1 and respective runtime methods 440 and 442 of FIG. 4. As such, interface method table 130 of FIG. 1, interface method table 424 of FIG. 4, and interface method table 724 can represent the same interface methods and the reference data in interface method table entries 0, 1, ... N-1 of interface method table 724 can be the same as the reference data in the respective interface method table entries 0, 1, ... N-1 of interface method table 130 and the reference data in the respective interface method table entries 0, 1, ... N-1 of interface method table 424; however, the entry point data of interface method table 724 is not present in interface method table 130 or interface method table 424. Additionally, vtable 132 of FIG. 1, vtable 426 of FIG. 4, and vtable 726 of FIG. 7 can represent the same virtual methods and the reference data in vtable entries 0, 1, ... P-1 of vtable 726 can be the same as the reference data in the respective interface method table entries 0, 1, ... P-1 of vtable 132 and the reference data in the respective interface method table entries 0, 1, ... P-1 of vtable 426; however, the entry point data of vtable 726 is not present in either vtable 132 or vtable 426.

As shown in FIG. 7, runtime environment 702 can include class instance 720 for a class that has N > 2 interface methods, and P > 2 virtual methods. In other examples, class instance 720 can be associated with a class with fewer interface methods and/or virtual methods; *i.e.,* N ≤ 2 and/or P ≤ 2. For example, class instance 720 can be associated a class that is unassociated with a software interface; *i.e.,* N = 0. In those examples, interface method table 724 and/or runtime methods for interface methods may not be present in runtime environment 702. In still other examples, class instance 720 can be associated that a class that is not associated with virtual methods; *i.e.,* P = 0. In those examples, vtable 726 and/or runtime methods for virtual methods may not be present in runtime environment 702.

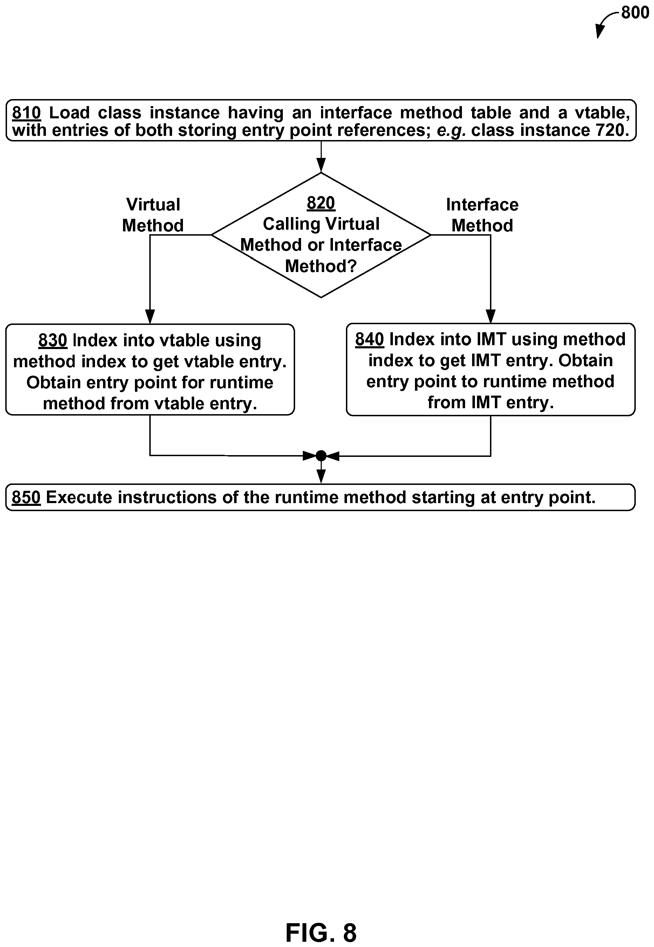

FIG. 8 is a flowchart of method 800, in accordance with an example embodiment. Method 800 can be carried out by a computing device, such as computing device 400 discussed above in the context of FIG. 4. Method 800 involves dispatching and calling a method of a class, where the method has a known method index. The called method can be either a virtual method of the class or an interface method of the class.

Method 800 can begin at block 810, where the computing device can load a class instance embedding an interface method table and a vtable with each table having entries that store entry point references, such as class instance 720. At block 820, the computing device can decide whether a virtual method is being called or an interface method is being called. If a virtual method is being called, the computing device can proceed to block 830; otherwise, an interface method is being called, and the computing device can proceed to block 840.

At block 830, since method 800 involves a call to a virtual method, the computing device can use the method index of the called method to index into the vtable of the class instance and find a vtable entry for the called method. Then, the computing device can use the found vtable entry to obtain an entry point to a runtime method corresponding to the called method. Upon completing block 830, the computing device can proceed to block 850.

At block 840, since method 700 involves a call to an interface method, the computing device can use the method index of the called method to index into the interface method table of the class instance and find an interface method table entry for the called method. Then, the computing device can use the found interface method table entry to obtain an entry point to a runtime method corresponding to the called method.

At block 850, the computing device can execute instructions of the corresponding runtime method starting at the entry point, thus calling the called method.

In comparing methods 200, 500, and 800, method 800 simplifies methods 200 and 500 by eliminating blocks related to the retrieval of interface method tables and vtables from respective interface method table pointers and virtual table pointers from method 200 and eliminating blocks related to determining entry points from entry point data stored in runtime functions from methods 200 and 500 as these tables and entry point values are embedded into the class instances. That is, by using embedded tables that store entry point values, method 800 does not utilize functionality related to blocks 232, 242, and 250 of method 200 or utilize functionality related to block 550 of method 500.

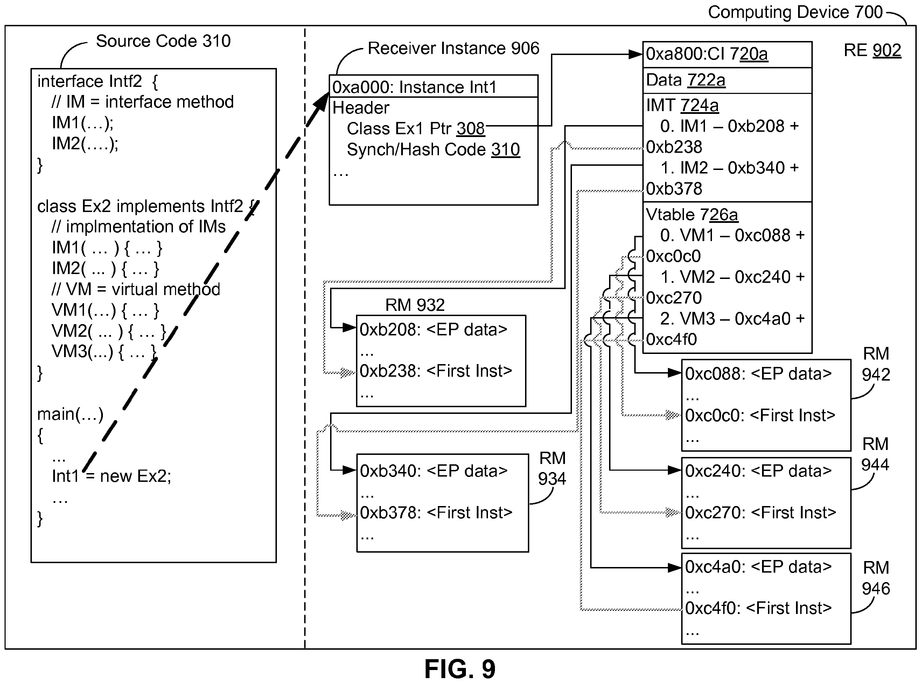

FIG. 9 shows computing device 400 storing source code 310 and providing corresponding runtime environment 802, in accordance with an example embodiment. Source code 310 is discussed above in the context of at least FIG. 3. Other classes can be supported by runtime environment 902 as well. FIG. 9 shows receiver instance 906 named "Inst1" in source code 310 that is stored by computing device 900 starting at memory address 0xa000 with a header including a pointer 908 to class instance 420a and a synchronization/hash code 910.

Runtime environment 602 is related to runtime environment 702 shown in FIG. 7. In particular, class instance 720a has the same fields as class instance 720 in runtime environment 702. As shown in FIG. 9, class instance 720a includes data 722a, interface method table 724a, and virtual table 726a fields, which correspond to respective data 722, interface method table 724, and virtual table 726 fields of class instance 720.

FIG. 9 shows that runtime environment 702 also includes five runtime methods summarized in Table 6 below. Table 6 is related to Tables 2 and 4 above - Table 6 has the same information as Tables 2 and 4, save that the numbers of the runtime methods differ between the respective first columns of Tables 2, 4, and 6.

**Table 6**

| **Runtime Method** | **Corresponds to / Has computer-executable instructions for** | **Starting Address** | **Entry Point** |
|---|---|---|---|
| Runtime Method 932 | Interface method IM1 | 0xb208 | 0xb238 |
| Runtime Method 934 | Interface method IM2 | 0xb340 | 0xb378 |
| Runtime Method 942 | Virtual method VM1 | 0xc088 | OxcOcO |
| Runtime Method 944 | Virtual method VM2 | 0xc240 | 0xc070 |
| Runtime Method 946 | Virtual method VM3 | 0xc4a0 | 0xc4f0 |

Interface method table 724a has two entries, each storing the same runtime reference data as interface method tables 330 and 424a, and additionally each entry of vtable 726a stores an entry point value for a corresponding runtime function. For example, FIG. 9 shows that entry 0 of interface method table 724a stores both a starting address of 0xb208 and an entry point of 0xb238 for corresponding runtime method 932 - the starting address 0xb208 is stored in entry 0 of interface method table 330 and in entry 0 of interface method table 424a, but the entry point 0xb238 is not stored in either interface method table 330 or interface method table 424a.

FIG. 9 includes black arrows leading from respective entries 0 and 1 of interface method table 724a to the respective starting addresses 0xb208 of runtime method 932 and 0xb340 of runtime method 934, and grey arrows leading from respective entries 0 and 1 of interface method table 724a to respective entry point addresses 0xb238 of runtime method 932 and 0xb370 of runtime method 932, to illustrate relationships between entries of interface method table 724a and runtime methods 932, 934.

Vtable 726a has three entries, each storing the same runtime reference data as vtables 330 and 426a, and additionally each entry of vtable 726a stores an entry point value for the corresponding runtime function. For example, FIG. 9 shows that entry 0 of vtable 726a stores both a starting address of 0xc088 and an entry point of OxcOcO for corresponding runtime method 942 - the starting address 0xc088 is stored in entry 0 of vtable 340 and in entry 0 of vtable 426a, but the entry point OxcOcO is not stored in either vtable 340 or vtable 426a.

FIG. 9 includes black arrows leading from respective entries 0, 1, and 2 of vtable 726a to the respective starting addresses 0xc088 of runtime method 942, 0xc240 of runtime method 944, and 0xc4a0 of runtime method 946, and grey arrows leading from respective entries 0, 1, and 2 of vtable 726a to respective entry point addresses OxcOcO of runtime method 942, 0xc270 of runtime method 944, and 0xc4f0 of runtime method 946 to illustrate relationships between entries of vtable 726a and runtime methods 942, 944, and 946.

Table 7A illustrates how computing device 700 can apply method 800 to runtime environment 902 to call interface methods IM1 and IM2.

**Table 7A**

| **Method 800 Block** | **IM1 Call** | **IM2 Call** |
|---|---|---|
| Block 810 (Load | Load class instance 720a at 0xa800 | The procedures for blocks 810 and |
| class instance) | using class Ex2 pointer 908 of receiver instance 606. | 820 of method 800 can be used for a call to interface method IM2 in the same way as described for the call to interface method IM1. |
| Block 820 (Virtual/Interface Method Test) | This is an interface method call, so proceed to block 840. | |
| Block 540 (Obtain entry point) | The method index for IM1 is 0. Index into interface method table 724a of class instance 720a to find entry 0. Entry point reference (EP) stored in entry 0 is 0xb238. | The method index for IM1 is 1. Index into interface method table 724a of class instance 720a to find entry 1. Entry point reference (EP) stored in entry 1 is 0xb378. |
| Block 560 (Execute instructions) | Execute instructions starting at EP 0xb238. | Execute instructions starting at EP 0xb378. |

Table 7B illustrates how computing device 700 can apply method 800 to runtime environment 902 to call virtual methods VM1, VM2, and VM3.

**Table 7B**

| **Method 800 Block** | **VM1 Call** | **VM2 Call** | **VM3 Call** |
|---|---|---|---|
| Block 810 (Load class instance) | Load class instance 420a at 0xa800 using class Ex2 pointer 608 of receiver instance 606. | The procedures for blocks 810 and 820 of method 800 can be used for calls to virtual methods VM2 and VM3 in the same way as described for the call to virtual method VM1. | |
| Block 820 (Virtual/Interface Method Test) | This is a virtual method call, so proceed to block 830. | | |
| Block 830 (Obtain entry point) | The method index for VM1 is 0. Index into vtable 726a of class instance 720a to find entry 0. Entry point reference (EP) stored in entry 0 is OxcOcO. | The method index for VM2 is 1. Index into vtable 726a of class instance 720a to find entry 1. EP stored in entry 0 is 0xc270. | The method index for VM3 is 2. Index into vtable 726a of class instance 720a to find entry 2. EP stored in entry 0 is 0xc4f0. |
| Block 850 (Execute instructions) | Execute instructions starting at EP OxcOcO. | Execute instructions starting at EP 0xc270. | Execute instructions starting at EP 0xc4f0. |

### Example Data Network

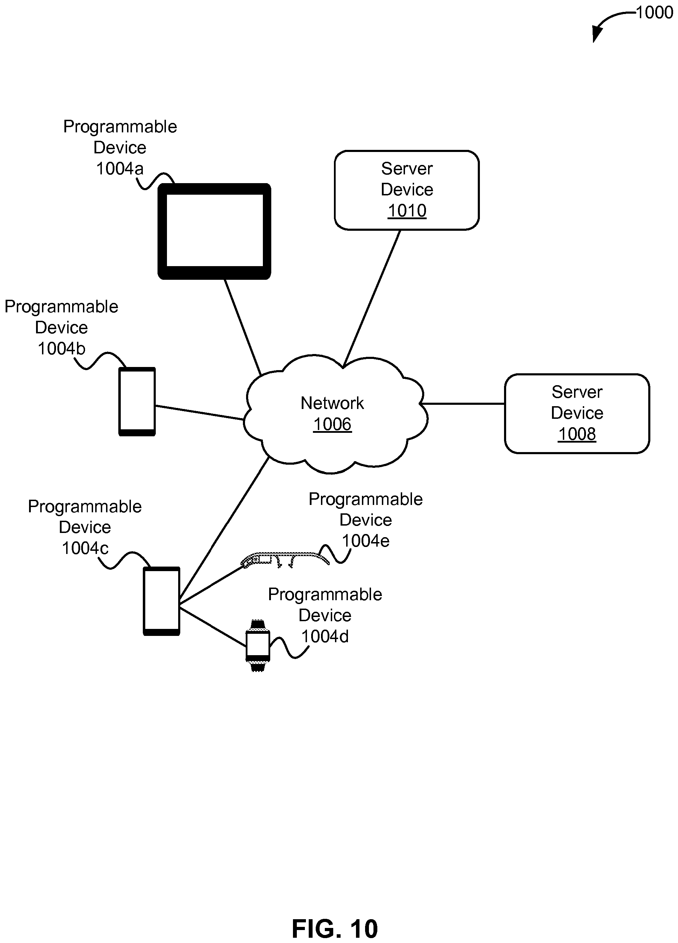

FIG. 10 depicts a distributed computing architecture 1000 with server devices 1008, 1010 configured to communicate, via network 1006, with programmable devices 1004a, 1004b, 1004c, 1004d, and 1004e, in accordance with an example embodiment. Network 1006 may correspond to a LAN, a wide area network (WAN), a corporate intranet, the public Internet, or any other type of network configured to provide a communications path between networked computing devices. The network 1006 may also correspond to a combination of one or more LANs, WANs, corporate intranets, and/or the public Internet.

Although FIG. 10 only shows three programmable devices, distributed application architectures may serve tens, hundreds, or thousands of programmable devices. Moreover, programmable devices 1004a, 1004b, 1004c, 1004d, and 1004e (or any additional programmable devices) may be any sort of computing device, such as an ordinary laptop computer, desktop computer, wearable computing device, mobile computing device, head-mountable device (HMD), network terminal, wireless communication device (*e.g.*, a smart phone or cell phone), and so on. In some embodiments, such as indicated with programmable devices 1004a, 1004b, and 1004c, programmable devices can be directly connected to network 1006. In other embodiments, such as indicated with programmable devices 1004d and 1004e, programmable devices can be indirectly connected to network 1006 via an associated computing device, such as programmable device 1004c. In this example, programmable device 1004c can act as an associated computing device to pass electronic communications between programmable devices 1004d and 1004e and network 1006. In still other embodiments not shown in FIG. 10, a programmable device can be both directly and indirectly connected to network 1006.

Server devices 1008, 1010 can be configured to perform one or more services, as requested by programmable devices 1004a-1004e. For example, server device 1008 and/or 1010 can provide content to programmable devices 1004a-1004e. The content can include, but is not limited to, web pages, hypertext, scripts, binary data such as compiled software, images, audio, and/or video. The content can include compressed and/or uncompressed content. The content can be encrypted and/or unencrypted. Other types of content are possible as well.

As another example, server device 1008 and/or 1010 can provide programmable devices 1004a-1004e with access to software for database, search, computation, graphical, audio, video, World Wide Web/Internet utilization, and/or other functions. Many other examples of server devices are possible as well.

### Computing Device Architecture

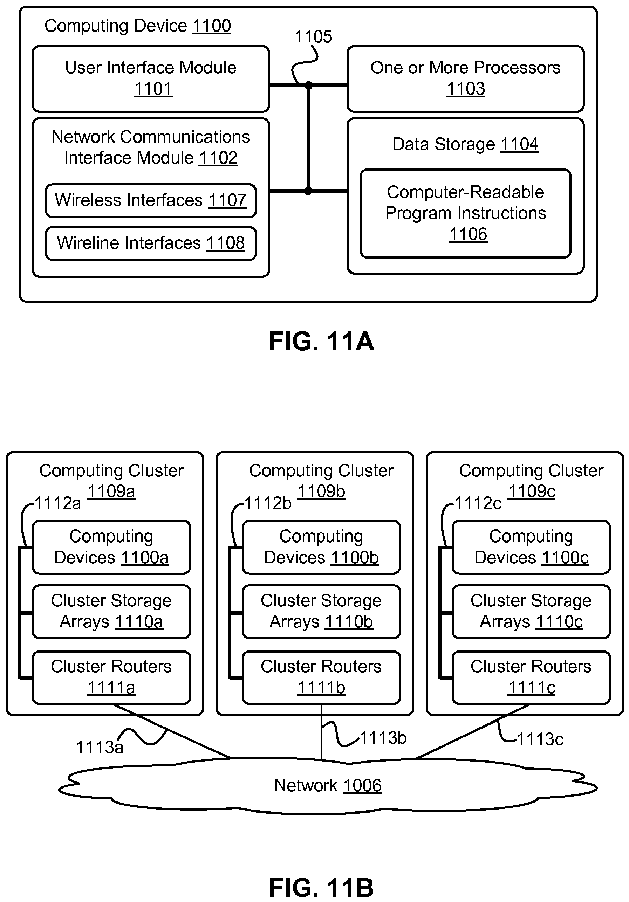

FIG. 11A is a block diagram of a computing device 1100 (e.g., system) in accordance with an example embodiment. In particular, computing device 1100 shown in FIG. 11A can be configured to perform one or more functions related to computing devices 100, 400, 700, runtime environments 102, 302, 402, 602, 702, 902, methods 200, 500, 800, 1200, source code 310, network 1006, server devices 1008, 1010, programmable devices 1004a, 1004b, 1004c, 1004d, and 1004e. Computing device 1100 may include a user interface module 1101, a network-communication interface module 1102, one or more processors 1103, and data storage 1104, all of which may be linked together via a system bus, network, or other connection mechanism 1105.

User interface module 1101 can be operable to send data to and/or receive data from exterior user input/output devices. For example, user interface module 1101 can be configured to send and/or receive data to and/or from user input devices such as a keyboard, a keypad, a touch screen, a computer mouse, a track ball, a joystick, a camera, a voice recognition module, and/or other similar devices. User interface module 1101 can also be configured to provide output to user display devices, such as one or more cathode ray tubes (CRT), liquid crystal displays (LCD), light emitting diodes (LEDs), displays using digital light processing (DLP) technology, printers, light bulbs, and/or other similar devices, either now known or later developed. User interface module 1101 can also be configured to generate audible output(s), such as a speaker, speaker jack, audio output port, audio output device, earphones, and/or other similar devices.

Network-communications interface module 1102 can include one or more wireless interfaces 1107 and/or one or more wireline interfaces 1108 that are configurable to communicate via a network, such as network 1006 shown in FIG. 10. Wireless interfaces 1107 can include one or more wireless transmitters, receivers, and/or transceivers, such as a Bluetooth transceiver, a Zigbee transceiver, a Wi-Fi transceiver, a WiMAX transceiver, and/or other similar type of wireless transceiver configurable to communicate via a wireless network. Wireline interfaces 1108 can include one or more wireline transmitters, receivers, and/or transceivers, such as an Ethernet transceiver, a Universal Serial Bus (USB) transceiver, or similar transceiver configurable to communicate via a twisted pair wire, a coaxial cable, a fiber-optic link, or a similar physical connection to a wireline network.

In some embodiments, network communications interface module 1102 can be configured to provide reliable, secured, and/or authenticated communications. For each communication described herein, information for ensuring reliable communications (*i*.*e*.*,* guaranteed message delivery) can be provided, perhaps as part of a message header and/or footer (e.g., packet/message sequencing information, encapsulation header(s) and/or footer(s), size/time information, and transmission verification information such as CRC and/or parity check values). Communications can be made secure (*e.g.*, be encoded or encrypted) and/or decrypted/decoded using one or more cryptographic protocols and/or algorithms, such as, but not limited to, DES, AES, RSA, Diffie-Hellman, and/or DSA. Other cryptographic protocols and/or algorithms can be used as well or in addition to those listed herein to secure (and then decrypt/decode) communications.

Processors 1103 can include one or more general purpose processors and/or one or more special purpose processors (e.g., digital signal processors, graphics processing units, application specific integrated circuits, etc.). Processors 1103 can be configured to execute computer-readable program instructions 1106 that are contained in the data storage 1104 and/or other instructions as described herein.

Data storage 1104 can include one or more computer-readable storage media that can be read and/or accessed by at least one of processors 1103. The one or more computer-readable storage media can include volatile and/or non-volatile storage components, such as optical, magnetic, organic or other memory or disc storage, which can be integrated in whole or in part with at least one of processors 1103. In some embodiments, data storage 1104 can be implemented using a single physical device (*e.g.,* one optical, magnetic, organic or other memory or disc storage unit), while in other embodiments, data storage 1104 can be implemented using two or more physical devices.

Data storage 1104 can include computer-readable program instructions 1106 and perhaps additional data. In some embodiments, data storage 1104 can additionally include storage required to perform at least part of the methods and techniques and/or at least part of the functionality of the devices and networks.

In some embodiments, computing device 1100 can include one or more sensors. The sensor(s) can be configured to measure conditions in an environment for computing device 1100 and provide data about that environment. The data can include, but is not limited to, location data about computing device 1100, velocity (speed, direction) data about computing device 1100, acceleration data about computing device, and other data about the environment for computing device 1100. The sensor(s) can include, but are not limited to, GPS sensor(s), location sensors(s), gyroscope(s), accelerometer(s), magnetometer(s), camera(s), light sensor(s), infrared sensor(s), and microphone(s). Other examples of sensors are possible as well.

### Cloud-Based Servers

FIG. 11B depicts network 1006 of computing clusters 1109a, 1109b, 1109c arranged as a cloud-based server system in accordance with an example embodiment. Server devices 1008 and/or 1010 can be configured to perform some or all of the herein-described functions related to computing devices 100, 400, 700, runtime environments 102, 302, 402, 602, 702, 902, methods 200, 500, 800, 1200, and source code 310.

Some or all of the modules/components of server devices 1008 and/or 1010 can be cloud-based devices that store program logic and/or data of cloud-based applications and/or services. In some embodiments, server devices 1008 and/or 1010 can be on a single computing device residing in a single computing center. In other embodiments, server devices 1008 and/or 1010 can include multiple computing devices in a single computing center, or even multiple computing devices located in multiple computing centers located in diverse geographic locations. For example, FIG. 10 depicts each of server devices 1008 and 1010 residing in different physical locations.

In some embodiments, software and data associated with server devices 1008 and/or 1010 can be encoded as computer readable information stored in non-transitory, tangible computer readable media (or computer readable storage media) and accessible by one or more of programmable devices 1004a-1004e and/or other computing devices. In some embodiments, data associated with server devices 1008 and/or 1010 can be stored on a single disk drive or other tangible storage media, or can be implemented on multiple disk drives or other tangible storage media located at one or more diverse geographic locations.

FIG. 11B depicts a cloud-based server system in accordance with an example embodiment. In FIG. 11B, the functions of server devices 1008 and/or 1010 can be distributed among three computing clusters 1109a, 1109b, and 1108c. Computing cluster 1109a can include one or more computing devices 1100a, cluster storage arrays 1110a, and cluster routers 1111 a connected by a local cluster network 1112a. Similarly, computing cluster 1109b can include one or more computing devices 1100b, cluster storage arrays 1110b, and cluster routers 1111b connected by a local cluster network 1112b. Likewise, computing cluster 1109c can include one or more computing devices 1100c, cluster storage arrays 1110c, and cluster routers 1111c connected by a local cluster network 1112c.

In some embodiments, each of the computing clusters 1109a, 1109b, and 1109c can have an equal number of computing devices, an equal number of cluster storage arrays, and an equal number of cluster routers. In other embodiments, however, each computing cluster can have different numbers of computing devices, different numbers of cluster storage arrays, and different numbers of cluster routers. The number of computing devices, cluster storage arrays, and cluster routers in each computing cluster can depend on the computing task or tasks assigned to each computing cluster.

In computing cluster 1109a, for example, computing devices 1100a can be configured to perform various computing tasks of server devices 1008 and/or 1010. In one embodiment, the various functionalities of server devices 1008 and/or 1010 can be distributed among one or more of computing devices 1100a, 1100b, and 1100c. Computing devices 1100b and 1100c in computing clusters 1109b and 1109c can be configured similarly to computing devices 1100a in computing cluster 1109a. On the other hand, in some embodiments, computing devices 1100a, 1100b, and 1100c can be configured to perform different functions.

In some embodiments, computing tasks and stored data associated with server devices 1008 and/or 1010 be distributed across computing devices 1100a, 1100b, and 1100c based at least in part on the storage and/or processing requirements of some or all components/modules of server devices 1008 and/or 1010, the storage and/or processing capabilities of computing devices 1100a, 1100b, and 1100c, the latency of the network links between the computing devices in each computing cluster and between the computing clusters themselves, and/or other factors that can contribute to the cost, speed, fault-tolerance, resiliency, efficiency, and/or other design goals of the overall system architecture.

The cluster storage arrays 1110a, 1110b, and 1110c of the computing clusters 1109a, 1109b, and 1109c can be data storage arrays that include disk array controllers configured to manage read and write access to groups of hard disk drives. The disk array controllers, alone or in conjunction with their respective computing devices, can also be configured to manage backup or redundant copies of the data stored in the cluster storage arrays to protect against disk drive or other cluster storage array failures and/or network failures that prevent one or more computing devices from accessing one or more cluster storage arrays.

Similar to the manner in which the functions of server devices 1008 and/or 1010 can be distributed across computing devices 1100a, 1100b, and 1100c of computing clusters 1109a, 1109b, and 1109c, various active portions and/or backup portions of data for these components can be distributed across cluster storage arrays 1110a, 1110b, and 1110c. For example, some cluster storage arrays can be configured to store the data of one or more modules/components of server devices 1008 and/or 1010, while other cluster storage arrays can store data of other modules/components of server devices 1008 and/or 1010. Additionally, some cluster storage arrays can be configured to store backup versions of data stored in other cluster storage arrays.

The cluster routers 1111a, 1111b, and 1111c in computing clusters 1109a, 1109b, and 1109c can include networking equipment configured to provide internal and external communications for the computing clusters. For example, the cluster routers 1111a in computing cluster 1109a can include one or more internet switching and routing devices configured to provide (i) local area network communications between the computing devices 1100a and the cluster storage arrays 1101a via the local cluster network 1112a, and (ii) wide area network communications between the computing cluster 1109a and the computing clusters 1109b and 1109c via the wide area network connection 1113a to network 1006. Cluster routers 1111b and 1111c can include network equipment similar to the cluster routers 1111a, and cluster routers 1111b and 1111c can perform similar networking functions for computing clusters 1109b and 1109b that cluster routers 1111a perform for computing cluster 1109a.

In some embodiments, the configuration of the cluster routers 1111a, 1111b, and 1111c can be based at least in part on the data communication requirements of the computing devices and cluster storage arrays, the data communications capabilities of the network equipment in the cluster routers 1111a, 1111b, and 1111c, the latency and throughput of local networks 1112a, 1112b, 1112c, the latency, throughput, and cost of wide area network links 1113a, 1113b, and 1113c, and/or other factors that can contribute to the cost, speed, fault-tolerance, resiliency, efficiency and/or other design goals of the moderation system architecture.

### Example Methods of Operation

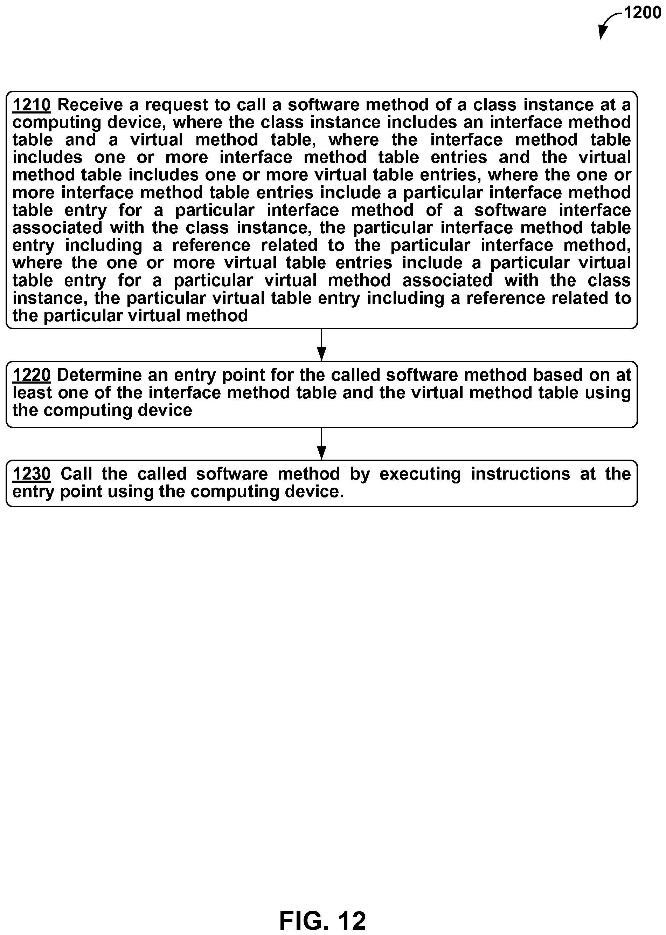

FIG. 12 is a flow chart illustrating method 1200, in accordance with an embodiment. Method 1200 can be carried out by one or more computing devices, such as, but not limited to, one or more of: computing devices 100, 400, 700, 1100, programmable devices 1004a-1004e, network 1006, server devices 1008, 1010, computing cluster 1109a, computing cluster 1109b, and computing cluster 1109c.

Method 1200 can begin at block 1210. At block 1210, a computing device can receive a request to call a software method of a class instance, such as discussed above in the context of at least FIGS. 4-9.

The class instance can include an interface method table and a virtual method table. The interface method table can include one or more interface method table entries and the virtual method table can include one or more virtual table entries. The one or more interface method table entries can include a particular interface method table entry for a particular interface method of a software interface associated with the class instance, where the particular interface method table entry can include a reference related to the particular interface method. The one or more virtual table entries can include a particular virtual table entry for a particular virtual method associated with the class instance, where the particular virtual table entry can include a reference related to the particular virtual method.

At block 1220, the computing device can determine an entry point for the called software method based on at least one of the interface method table and the virtual method table, such as discussed above in the context of at least FIGS. 4-9.

In some embodiments, determining the entry point for the called software method based the at least one of the interface method table and the virtual method table can include the computing device, upon determining that the called software method is an interface method of the software interface: determining a called interface method table entry of the interface method table that is associated with the called software method and determining the entry point based on the called interface method table entry, such as discussed above in the context of at least FIGS. 4-9.

In particular of these embodiments, the called interface method table entry can include a runtime-method reference. Then, determining the entry point based on the called interface method table entry can include determining the entry point based on the runtime-method reference, such as discussed above in the context of at least FIGS. 4-9. In more particular of these embodiments, the called software method can be associated with a particular runtime method, the runtime-method reference can include a starting address of the particular runtime method, and the entry point can be based on a value stored in the starting address of the particular runtime method, such as discussed above in the context of at least FIGS. 4-6.

In other particular of these embodiments, the called interface method table entry can include an entry-point value. Then, determining the entry point based on the called interface method table entry includes determining the entry point based on the entry point value, such as discussed above in the context of at least FIGS. 7-9. In more particular of these embodiments, the called software method can be associated with a particular runtime method, and the entry point value can include an entry point for the particular runtime method, such as discussed above in the context of at least FIGS. 7-9.

In even other embodiments, determining the entry point for the called software method based the at least one of the interface method table and the virtual method table can include the computing device, upon determining whether the called software method is a virtual method associated with the class instance: determining a called vtable entry of the vtable that is associated with the called software method and can determine the entry point based on the called vtable entry, such as discussed above in the context of at least FIGS. 4-9.

In particular of the even other embodiments, the called vtable entry can include a runtime-method reference. Then, determining the entry point based on the called vtable entry includes determining the entry point based on the runtime-method reference, such as discussed above in the context of at least FIGS. 4-9. In more particular of the even other embodiments, the called software method can be associated with a particular runtime method, the runtime-method reference can include a starting address of the particular runtime method, and where the entry point can be based on a value stored in the starting address of the particular runtime method, such as discussed above in the context of at least FIGS. 4-6.

In other particular of the even other embodiments, the called vtable entry can include an entry-point value. Then, determining the entry point based on the called vtable entry can include determining the entry point based on the entry point value, such as discussed above in the context of at least FIGS. 7-9. In even more particular of the even other embodiments, the called software method can be associated with a particular runtime method, and the entry point value can include an entry point for the particular runtime method, such as discussed above in the context of at least FIGS. 7-9

At block 1230, the computing device can call the called software method by executing instructions at the entry point, such as discussed above in the context of at least FIGS. 4-9.

According to the method of claim 1, the placeholder virtual method table has an estimated virtual method table size. In some embodiments, method 1200 can further include: determining a predetermined interface-table size for the interface method table; determining the estimated virtual-method-table size for the virtual method table; determining a first size for the class instance based on the predetermined interface-table size and the estimated virtual-method-table size; after determining the first size for the class instance, determining an actual virtual-method-table size; and determining a second size for the class instance based on the predetermined interface-table size and the actual virtual-method-table size. Determining the estimated virtual-method-table size can be performed prior to linking the class instance, and determining the actual virtual-method-table size can be performed during or after linking the class instance.

In other embodiments, method 1200 can further include: storing the class instance in a memory of the computing device starting at a base address, where the interface method table has a predetermined size and is configured to be stored at starting at a first predetermined offset address from the base address, where the virtual address table is configured to be stored starting at a second predetermined offset from the base address, and where the second predetermined offset is based on the first predetermined offset address and the predetermined size.

The above detailed description describes various features and functions of the disclosed systems, devices, and methods with reference to the accompanying figures. In the figures, similar symbols typically identify similar components, unless context dictates otherwise. The illustrative embodiments described in the detailed description, figures, and claims are not meant to be limiting. It will be readily understood that the aspects of the present disclosure, as generally described herein, and illustrated in the figures, can be arranged, substituted, combined, separated, and designed in a wide variety of different configurations, all of which are explicitly contemplated herein.

With respect to any or all of the ladder diagrams, scenarios, and flow charts in the figures and as discussed herein, each block and/or communication may represent a processing of information and/or a transmission of information in accordance with example embodiments. Alternative embodiments are included within the scope of these example embodiments. In these alternative embodiments, for example, functions described as blocks, transmissions, communications, requests, responses, and/or messages may be executed out of order from that shown or discussed, including substantially concurrent or in reverse order, depending on the functionality involved. Further, more or fewer blocks and/or functions may be used with any of the ladder diagrams, scenarios, and flow charts discussed herein, and these ladder diagrams, scenarios, and flow charts may be combined with one another, in part or in whole.

A block that represents a processing of information may correspond to circuitry that can be configured to perform the specific logical functions of a herein-described method or technique. Alternatively or additionally, a block that represents a processing of information may correspond to a module, a segment, or a portion of program code (including related data). The program code may include one or more instructions executable by a processor for implementing specific logical functions or actions in the method or technique. The program code and/or related data may be stored on any type of computer readable medium such as a storage device including a disk or hard drive or other storage medium.

The computer readable medium may also include non-transitory computer readable media such as non-transitory computer-readable media that stores data for short periods of time like register memory, processor cache, and random access memory (RAM). The computer readable media may also include non-transitory computer readable media that stores program code and/or data for longer periods of time, such as secondary or persistent long term storage, like read only memory (ROM), optical or magnetic disks, compact-disc read only memory (CD-ROM), for example. The computer readable media may also be any other volatile or non-volatile storage systems. A computer readable medium may be considered a computer readable storage medium, for example, or a tangible storage device.

Moreover, a block that represents one or more information transmissions may correspond to information transmissions between software and/or hardware modules in the same physical device. However, other information transmissions may be between software modules and/or hardware modules in different physical devices.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method, comprising:
allocating storage for a placeholder class instance of a software object using a computing device (400), wherein the placeholder class instance comprises an interface method table and a placeholder virtual method table, and wherein the placeholder virtual method table has an estimated virtual method table size;
after allocating storage for the placeholder class instance, determining an actual size of a virtual method table for the software object;
after determining the actual size of the virtual method table, allocating storage for a class instance (420) of the software object using the computing device, wherein the class instance comprises an interface method table (424) and a virtual method table (426) having the actual size of the virtual method table;
after allocating storage for the class instance, replacing the placeholder class instance with the class instance;
receiving a request to call a software method of the class instance at the computing device, wherein the interface method table comprises one or more interface method table entries and the virtual method table comprises one or more virtual table entries, wherein the one or more interface method table entries comprise a particular interface method table entry for a particular interface method of a software interface associated with the class instance, the particular interface method table entry comprising a reference related to the particular interface method (440), wherein the one or more virtual table entries comprise a particular virtual table entry for a particular virtual method (442) associated with the class instance, the particular virtual table entry comprising a reference related to the particular virtual method;
determining an entry point for the called software method based on at least one of the interface method table and the virtual method table using the computing device, wherein the entry point is an address of a first executable instruction of the called software method; and
calling the called software method by executing instructions at the entry point using the computing device.

2. The method of claim 1, wherein determining the entry point for the called software method based the at least one of the interface method table and the virtual method table comprises:
upon determining that the called software method is an interface method of the software interface, the computing device:
determining a called interface method table entry of the interface method table that is associated with the called software method; and
determining the entry point based on the called interface method table entry.

3. The method of claim 2, wherein the called interface method table entry comprises a runtime-method reference, and wherein determining the entry point based on the called interface method table entry comprises determining the entry point based on the runtime-method reference.

4. The method of claim 3, wherein the called software method is associated with a particular runtime method, wherein the runtime-method reference comprises a starting address of the particular runtime method, and where the entry point is based on a value stored in the starting address of the particular runtime method.

5. The method of claim 2, wherein the called interface method table entry comprises an entry-point value, and wherein determining the entry point based on the called interface method table entry comprises determining the entry point based on the entry point value.

6. The method of claim 5, wherein the called software method is associated with a particular runtime method, and wherein the entry point value comprises an entry point for the particular runtime method.

7. The method of claim 1, wherein determining the entry point for the called software method based the at least one of the interface method table and the virtual method table comprises:
upon determining that the called software method is a virtual method associated with the class instance, the computing device:
determining a called virtual method table entry of the virtual method table that is associated with the called software method; and
determining the entry point based on the called virtual method table entry.

8. The method of claim 7, wherein the called virtual method table entry comprises a runtime-method reference, and wherein determining the entry point based on the called virtual method table entry comprises determining the entry point based on the runtime-method reference.

9. The method of claim 8, wherein the called software method is associated with a particular runtime method, wherein the runtime-method reference comprises a starting address of the particular runtime method, and where the entry point is based on a value stored in the starting address of the particular runtime method.

10. The method of claim 7, wherein the called virtual method table entry comprises an entry-point value, and wherein determining the entry point based on the called virtual method table entry comprises determining the entry point based on the entry point value.

11. The method of claim 10, wherein the called software method is associated with a particular runtime method, and wherein the entry point value comprises an entry point for the particular runtime method.

12. The method of claim 1, further comprising:
storing the class instance in a memory of the computing device starting at a base address, wherein the interface method table has a predetermined size and is configured to be stored at starting at a first predetermined offset address from the base address, wherein the virtual address table is configured to be stored starting at a second predetermined offset from the base address, and wherein the second predetermined offset is based on the first predetermined offset address and the predetermined size.

13. A computing device (400), comprising:
one or more processors (1103); and
data storage (1104) having instructions (1106) stored thereon that, upon execution of the instructions by the one or more processors, cause the one or more processors to carry out the method of any of claims 1-12.

14. A computer program comprising instructions (1106) which, when the program is executed by one or more processors (1103), cause the one or more processors to carry out the method of any of claims 1-12.

15. An article of manufacture including data storage having instructions (1106) stored thereon that, when executed by one or more processors (1103), cause the one or more processors to carry out the method of any of claims 1-12.

## Patentansprüche

1. Verfahren, umfassend:
Zuweisen eines Speichers für eine Platzhalter-Klasseninstanz eines Softwareobjekts unter Nutzung eines Computergeräts (400), wobei die Platzhalter-Klasseninstanz eine Schnittstellenmethodentabelle und eine virtuelle Platzhalter-Methodentabelle aufweist, und wobei die virtuelle Platzhalter-Methodentabelle eine geschätzte virtuelle Methodentabellengröße aufweist;
nach dem Zuweisen eines Speichers für die Platzhalter-Klasseninstanz, Ermitteln einer tatsächlichen Größe einer virtuellen Methodentabelle für das Softwareobjekt;
nach dem Ermitteln der tatsächlichen Größe der virtuellen Methodentabelle, Zuweisen eines Speichers für eine Klasseninstanz (420) des Softwareobjekts unter Nutzung des Computergeräts, wobei die Klasseninstanz eine Schnittstellenmethodentabelle (424) und eine virtuelle Methodentabelle (426) mit der tatsächlichen Größe der virtuellen Methodentabelle aufweist;
nach dem Zuweisen eines Speichers für die Klasseninstanz, Ersetzen der Platzhalter-Klasseninstanz durch die Klasseninstanz;
Empfangen einer Anforderung zum Aufrufen einer Softwaremethode der Klasseninstanz auf dem Computergerät, wobei die Schnittstellenmethodentabelle einen oder mehrere Schnittstellenmethodentabelleneinträge umfasst und die virtuelle Methodentabelle einen oder mehrere virtuelle Tabelleneinträge umfasst, wobei der eine oder die mehreren Schnittstellenmethodentabelleneinträge einen bestimmten Schnittstellenmethodentabelleneintrag für eine bestimmte Schnittstellenmethode einer mit der Klasseninstanz assoziierten Softwareschnittstelle umfassen, wobei der bestimmte Schnittstellenmethodentabelleneintrag eine Referenz in Bezug auf die bestimmte Schnittstellenmethode (440) umfasst, wobei der eine oder die mehreren virtuellen Tabelleneinträge einen bestimmten virtuellen Tabelleneintrag für eine bestimmte virtuelle Methode (442) umfassen, die mit der Klasseninstanz assoziiert ist, wobei der bestimmte virtuelle Tabelleneintrag eine Referenz in Bezug auf die bestimmte virtuelle Methode umfasst;
Ermitteln eines Eintrittspunkts für die aufgerufene Softwaremethode basierend auf zumindest einer der Schnittstellenmethodentabelle und der virtuellen Methodentabelle unter Nutzung des Computergeräts, wobei der Eintrittspunkt eine Adresse einer ersten ausführbaren Anweisung der aufgerufenen Softwaremethode ist; und
Aufruf der aufgerufenen Softwaremethode durch Ausführen von Anweisungen am Eintrittspunkt unter Nutzung des Computergeräts.

2. Verfahren nach Anspruch 1, wobei das Ermitteln des Eintrittspunkts für die aufgerufene Softwaremethodentabelle zumindest eine der Schnittstellenmethodentabelle und der virtuellen Methodentabelle umfasst:
nach dem Ermitteln, dass es sich bei der aufgerufenen Softwaremethode um eine Schnittstellenmethode der Softwareschnittstelle handelt, das Computergerät:
Ermitteln eines aufgerufenen Schnittstellenmethodentabelleneintrags der Schnittstellenmethodentabelle, der mit der aufgerufenen Softwaremethode assoziiert ist; und
Ermitteln des Eintrittspunkts basierend auf dem aufgerufenen Schnittstellenmethodentabelleneintrag.

3. Verfahren nach Anspruch 2, wobei der aufgerufene Schnittstellenmethodentabelleneintrag eine Laufzeitmethodenreferenz umfasst und wobei das Ermitteln des Eintrittspunkts basierend auf dem aufgerufenen Schnittstellenmethodentabelleneintrag das Ermitteln des Eintrittspunkts basierend auf der Laufzeitmethodenreferenz umfasst.

4. Verfahren nach Anspruch 3, wobei die aufgerufene Softwaremethode mit einer bestimmten Laufzeitmethode assoziiert ist, wobei die Laufzeitmethodenreferenz eine Startadresse der bestimmten Laufzeitmethode umfasst, und wobei der Eintrittspunkt auf einem Wert basiert, der in der Startadresse der bestimmten Laufzeitmethode gespeichert ist.

5. Verfahren nach Anspruch 2, wobei der aufgerufene Schnittstellenmethodentabelleneintrag einen Eintrittspunktwert umfasst und wobei das Ermitteln des Eintrittspunkts basierend auf dem aufgerufenen Schnittstellenmethodentabelleneintrag das Ermitteln des Eintrittspunkts basierend auf dem Eintrittspunktwert umfasst.

6. Verfahren nach Anspruch 5, wobei die aufgerufene Softwaremethode mit einer bestimmten Laufzeitmethode assoziiert ist, und wobei der Eintrittspunktwert einen Eintrittspunkt für die bestimmte Laufzeitmethode umfasst.

7. Verfahren nach Anspruch 1, wobei das Ermitteln des Eintrittspunkts für die aufgerufene Softwaremethode zumindest eine der Schnittstellenmethodentabelle und der virtuellen Methodentabelle umfasst:
nach dem Ermitteln, dass die aufgerufene Softwaremethode eine virtuelle Methode ist, die mit der Klasseninstanz assoziiert ist, das Computergerät:
Ermitteln eines aufgerufenen virtuellen Methodentabelleneintrags der virtuellen Methodentabelle, der mit der aufgerufenen Softwaremethode assoziiert ist; und
Ermitteln des Eintrittspunkts basierend auf dem aufgerufenen virtuellen Methodentabelleneintrag.

8. Verfahren nach Anspruch 7, wobei der aufgerufene virtuelle Methodentabelleneintrag eine Laufzeitmethodenreferenz umfasst, und wobei das Ermitteln des Eintrittspunkts basierend auf dem aufgerufenen virtuellen Methodentabelleneintrag das Ermitteln des Eintrittspunkts basierend auf der Laufzeitmethodenreferenz umfasst.

9. Verfahren nach Anspruch 8, wobei die aufgerufene Softwaremethode mit einer bestimmten Laufzeitmethode assoziiert ist, wobei die Laufzeitmethodenreferenz eine Startadresse der bestimmten Laufzeitmethode umfasst, und wobei der Eintrittspunkt auf einem Wert basiert, der in der Startadresse der bestimmten Laufzeitmethode gespeichert ist.

10. Verfahren nach Anspruch 7, wobei der aufgerufene virtuelle Methodentabelleneintrag einen Eintrittspunktwert umfasst, und wobei das Ermitteln des Eintrittspunkts basierend auf dem aufgerufenen virtuellen Methodentabelleneintrag das Ermitteln des Eintrittspunkts basierend auf dem Eintrittspunktwert umfasst.

11. Verfahren nach Anspruch 10, wobei die aufgerufene Softwaremethode mit einer bestimmten Laufzeitmethode assoziiert ist, und wobei der Eintrittspunktwert einen Eintrittspunkt für die bestimmte Laufzeitmethode umfasst.

12. Verfahren nach Anspruch 1, ferner umfassend:
Speichern der Klasseninstanz in einem Speicher des Computergeräts beginnend bei einer Basisadresse, wobei die Schnittstellenmethodentabelle eine vorbestimmte Größe aufweist und so konfiguriert ist, dass sie beginnend bei einer ersten vorbestimmten Offsetadresse von der Basisadresse gespeichert wird, wobei die virtuelle Adresstabelle so konfiguriert ist, dass sie beginnend bei einem zweiten vorbestimmten Offset von der Basisadresse gespeichert wird, und wobei der zweite vorbestimmte Offset auf der ersten vorbestimmten Offsetadresse und der vorbestimmten Größe basiert.

13. Computergerät (400), umfassend:
einen oder mehrere Prozessoren (1103); und
einen Datenspeicher (1104) mit darauf gespeicherten Anweisungen (1106), die bei Ausführung der Anweisungen durch den einen oder die mehreren Prozessoren den einen oder die mehreren Prozessoren veranlassen, das Verfahren nach einem der Ansprüche 1-12 auszuführen.

14. Computerprogramm, umfassend Anweisungen (1106), die, bei Ausführung des Programms durch einen oder mehrere Prozessoren (1103), den einen oder die mehreren Prozessoren veranlassen, das Verfahren nach einem der Ansprüche 1-12 auszuführen.

15. Herstellungsgegenstand einen Datenspeicher beinhaltend, auf dem Anweisungen (1106) gespeichert sind, die, bei Ausführung durch einen oder mehrere Prozessoren (1103), den einen oder die mehreren Prozessoren veranlassen, das Verfahren nach einem der Ansprüche 1-12 auszuführen.

## Revendications

1. Procédé comprenant :
l'allocation de stockage pour une instance de classe de paramètres substituables d'un objet logiciel en utilisant un dispositif informatique (400), dans lequel l'instance de classe de paramètres substituables comprend un tableau de procédé d'interface et un tableau de procédé virtuel de paramètres substituables, et dans lequel le tableau de procédé virtuel de paramètres substituables a une taille estimée de tableau de procédé virtuel ;
après l'allocation de stockage pour l'instance de classe de paramètres substituables, la détermination d'une taille réelle d'un tableau de procédé virtuel pour l'objet logiciel ;
après la détermination de la taille réelle du tableau de procédé virtuel, l'allocation de stockage pour une instance de classe (420) de l'objet logiciel en utilisant le dispositif informatique, dans lequel l'instance de classe comprend un tableau de procédé d'interface (424) et un tableau de procédé virtuel (426) ayant la taille réelle du tableau de procédé virtuel ;
après l'allocation de stockage pour l'instance de classe, le remplacement de l'instance de classe de paramètres substituables par l'instance de classe ;
la réception d'une demande d'appel d'un procédé logiciel de l'instance de classe au niveau du dispositif informatique, dans lequel le tableau de procédé d'interface comprend une ou plusieurs entrées de tableau de procédé d'interface et le tableau de procédé virtuel comprend une ou plusieurs entrées de tableau virtuel, dans lequel les une ou plusieurs entrées de tableau de procédé d'interface comprennent une entrée de tableau de procédé d'interface particulière pour un procédé d'interface particulier d'une interface logicielle associée à l'instance de classe, l'entrée de tableau de procédé d'interface particulière comprenant une référence liée au procédé d'interface particulier (440), dans lequel les une ou plusieurs entrées de tableau virtuel comprennent une entrée de tableau virtuel particulière pour un procédé virtuel particulier (442) associé à l'instance de classe, l'entrée de tableau virtuel particulière comprenant une référence liée au procédé virtuel particulier ;
la détermination d'un point d'entrée pour le procédé logiciel appelé sur la base d'au moins l'un parmi le tableau de procédé d'interface et le tableau de procédé virtuel en utilisant le dispositif informatique, dans lequel le point d'entrée est une adresse d'une première instruction exécutable du procédé logiciel appelé ; et
l'appel du procédé logiciel appelé en exécutant des instructions au point d'entrée en utilisant le dispositif informatique.

2. Procédé selon la revendication 1, dans lequel la détermination du point d'entrée pour le procédé logiciel appelé sur la base d'au moins l'un parmi le tableau de procédé d'interface et le tableau de procédé virtuel comprend :
lors de la détermination que le procédé logiciel appelé est un procédé d'interface de l'interface logicielle, le dispositif informatique :
détermine une entrée de tableau de procédé d'interface appelée du tableau de procédé d'interface qui est associée au procédé logiciel appelé ; et
détermine le point d'entrée sur la base de l'entrée de tableau de procédé d'interface appelée.

3. Procédé selon la revendication 2, dans lequel l'entrée de tableau de procédé d'interface appelée comprend une référence de procédé d'exécution, et dans lequel la détermination du point d'entrée sur la base de l'entrée de tableau de procédé d'interface appelée comprend la détermination du point d'entrée sur la base de la référence de procédé d'exécution.

4. Procédé selon la revendication 3, dans lequel le procédé logiciel appelé est associé à un procédé d'exécution particulier, dans lequel la référence de procédé d'exécution comprend une adresse de début du procédé d'exécution particulier, et où le point d'entrée est basé sur une valeur stockée dans l'adresse de début du procédé d'exécution particulier.

5. Procédé selon la revendication 2, dans lequel l'entrée de tableau de procédé d'interface appelée comprend une valeur de point d'entrée, et dans lequel la détermination du point d'entrée sur la base de l'entrée de tableau de procédé d'interface appelée comprend la détermination du point d'entrée sur la base de la valeur de point d'entrée.

6. Procédé selon la revendication 5, dans lequel le procédé logiciel appelé est associé à un procédé d'exécution particulier, et dans lequel la valeur de point d'entrée comprend un point d'entrée pour le procédé d'exécution particulier.

7. Procédé selon la revendication 1, dans lequel la détermination du point d'entrée pour le procédé logiciel appelé sur la base d'au moins l'un parmi le tableau de procédé d'interface et le tableau de procédé virtuel comprend :
lors de la détermination que la procédé logiciel appelé est un procédé virtuel associé à l'instance de classe, le dispositif informatique :
détermine une entrée de tableau de procédé virtuel appelée du tableau de procédé virtuel qui est associée au procédé logiciel appelé ; et
détermine le point d'entrée sur la base de l'entrée de tableau de procédé virtuel appelée.

8. Procédé selon la revendication 7, dans lequel l'entrée de tableau de procédé virtuel appelée comprend une référence de procédé d'exécution, et dans lequel la détermination du point d'entrée sur la base de l'entrée de tableau de procédé virtuel appelée comprend la détermination du point d'entrée sur la base de la référence de procédé d'exécution.

9. Procédé selon la revendication 8, dans lequel le procédé logiciel appelé est associé à un procédé d'exécution particulier, dans lequel la référence de procédé d'exécution comprend une adresse de début du procédé d'exécution particulier, et où le point d'entrée est basé sur une valeur stockée dans l'adresse de début du procédé d'exécution particulier.

10. Procédé selon la revendication 7, dans lequel l'entrée de tableau de procédé virtuel appelée comprend une valeur de point d'entrée, et dans lequel la détermination du point d'entrée sur la base de l'entrée de tableau de procédé virtuel appelée comprend la détermination du point d'entrée sur la base de la valeur de point d'entrée.

11. Procédé selon la revendication 10, dans lequel le procédé logiciel appelé est associé à un procédé d'exécution particulier, et dans lequel la valeur de point d'entrée comprend un point d'entrée pour le procédé d'exécution particulier.

12. Procédé selon la revendication 1, comprenant en outre :
le stockage de l'instance de classe dans une mémoire du dispositif informatique commençant à une adresse de base, dans lequel le tableau de procédé d'interface a une taille prédéterminée et est configuré pour être stocké au début au niveau d'une première adresse de décalage prédéterminé à partir de l'adresse de base, dans lequel le tableau d'adresses virtuelles est configurée pour être stocké en commençant au niveau d'un deuxième décalage prédéterminé à partir de l'adresse de base, et dans lequel le deuxième décalage prédéterminé est basé sur la première adresse de décalage prédéterminé et la taille prédéterminée.

13. Dispositif informatique (400), comprenant :
un ou plusieurs processeurs (1103) ; et
un stockage de données (1104) ayant des instructions (1106) stockées sur celui-ci qui, lors de l'exécution des instructions par les un ou plusieurs processeurs, amènent les un ou plusieurs processeurs à réaliser le procédé selon l'une quelconque des revendications 1 à 12.

14. Programme informatique comprenant des instructions (1106) qui, lorsque le programme est exécuté par un ou plusieurs processeurs (1103), amènent les un ou plusieurs processeurs à réaliser le procédé selon l'une quelconque des revendications 1 à 12.

15. Article de fabrication comprenant un stockage de données ayant des instructions (1106) stockées sur celui-ci qui, lorsqu'elles sont exécutées par un ou plusieurs processeurs (1103), amènent les un ou plusieurs processeurs à réaliser le procédé selon l'une quelconque des revendications 1 à 12.
